# EUROPEAN PATENT APPLICATION

(11) **EP 4 697 026 A1**
(43) Date of publication of application: **18.02.2026**
(21) Application number: 24788448.9
(22) Date of filing: 29.02.2024
(51) Int. Cl.: G01N 35/00, G01N 35/04

(54) **CONTAINER STORAGE DEVICE, ANALYSIS SYSTEM, AND CONTAINER TRANSFER METHOD**

(30) Priority: 11.04.2023 JP 2023064187
(71) Applicant: HITACHI HIGH-TECH CORPORATION, Tokyo 105-6409 (JP)
(72) Inventor: MURAMATSU Yoshiki, Tokyo 105-6409 (JP); YAMASHITA Taichiro, Tokyo 105-6409 (JP); OKUSA Takenori, Tokyo 105-6409 (JP); KUMAGAI Takahiro, Tokyo 105-6409 (JP); SASAKI Shunsuke, Tokyo 105-6409 (JP)
(74) Representative: Strehl & Partner mbB
(86) International application number: PCT/JP2024/007622
(87) International publication number: WO 2024/214418

(57) **Abstract**

Provided are a container storage device, an analysis system, and a container transfer method. The container storage device can store QC specimen containers stably for a long period of time by cooling the QC specimen containers and increase the number of sample containers capable of being stored in a storage chamber, and is reduced in size by reducing the size particularly in a width direction. The container storage device includes: a housing which has a first side surface and a pair of second side surfaces respectively extending from both ends of the first side surface; a first conveyance path which is formed along the first side surface and through which a plurality of containers containing a liquid are conveyable; a cylindrical storage chamber surrounded by the first conveyance path and the pair of second side surfaces and configured to store the plurality of containers; and a second conveyance path through which the containers are conveyable between a first reception position on the first conveyance path and a second reception position in the storage chamber. A straight line connecting the first reception position and the second reception position in a plan view is formed obliquely to the first conveyance path.

## Description

### Technical Field

The present invention relates to a container storage device, an analysis system, and a container transfer method.

### Background Art

An automatic analyzer is a device that automatically analyzes blood and other biological samples and outputs results and is an essential device in hospitals and medical test facilities. In these automatic analyzers, it is required to perform more various tests in a shorter time.

The automatic analyzer requires quality control using a standard sample and a quality control sample when necessary, such as when the automatic analyzer is started up each morning or when reagents are additionally added, which places a burden on an operator. Therefore, there is a demand for an automatic analyzer that can achieve quality control without the operator loading the standard sample or the quality control sample each time.

Here, the standard sample is a sample for drawing a calibration curve which is a graph showing a relationship between the concentration, activity, and the like which are known in advance and corresponding measurement data (reagent reactivity = Abs or count). The standard sample is used to calibrate the reagent when the lot of the reagent changes or when the measurement results of the quality control sample deviate from the control range, and a relationship between the sample concentration and the reagent reactivity is matched. When measuring daily samples (quality control samples and patient samples), the reagent reactivity obtained by analyzing these samples is applied to a calibration curve, and the concentration and activity of these samples can be determined from the calibration curve. The standard sample may be referred to as a calibrator specimen, a calibrator fluid, or simply a calibrator.

The quality control sample is a sample for routine inspection such as daily inspection, morning inspection, daytime inspection, and night inspection, and is used to check that the automatic analyzer operates correctly and outputs a correct measurement value or to check whether the reagent deteriorates. The quality control sample may be referred to as a control sample, a control fluid, or a control specimen. The standard sample and the quality control sample may be collectively referred to as a QC specimen or a QC specimen sample.

An automatic analyzer (clinical analyzer) described in PTL 1 is configured such that "A refrigerated storage assembly integrated with a clinical analyzer includes an insulated housing, an insulated door assembly including one or more doors, one or more thermoelectric coolers, and a refrigerated base assembly contained within the insulated housing and beneath the insulated door assembly. The refrigerated base assembly includes a metal plate thermally coupled to the one or more thermoelectric coolers, one or more thermal sensors, and a plurality of receptacles arranged in an array, each receptacle configured to receive one fluid tube of a plurality of fluid tubes. When the one or more doors are closed, the refrigerated base assembly provides a refrigerated environment configured for multi-day storage of at least one of a control and a calibrator fluid contained within the plurality of fluid tubes. Each evaporation cover for each tube is provided to reduce evaporation due to long-term storage. These covers can be independently attached and detached by a robot arm, and the robot arm is configured to take out a tube for the purpose of being used by another system in the clinical analyzer and is also used to place these tubes in an automation system (Solution to Problem)".

An automatic analyzer described in PTL 2 "includes an analysis unit that analyzes a biological sample, a conveyance mechanism that conveys a specimen rack to the analysis unit and conveys, from the analysis unit, the specimen rack for which sample dispensing has been completed, a specimen supply unit that supplies a specimen to a specimen buffer, and a specimen storage unit that contains the specimen from the specimen buffer (Solution to Problem)" and "includes a mechanism capable of continuously holding a quality control sample loaded to the sample buffer (Solution to Problem)".

### Citation List

### Patent Literature

PTL 1: JP2019-525116A
PTL 2: JP2009-294230A

### Summary of Invention

### Technical Problem

There are many types of such QC specimen samples since the QC specimen samples differ for each analysis item. Therefore, it is desirable that a storage chamber stores, for example, 100 or more samples.

Here, in order to prevent deterioration in the QC specimens, contamination with foreign matter, changes in concentration due to evaporation, and the like, it is desirable to perform storage by cooling QC specimens in a sealed case at the time of storage.

Furthermore, the container storage device according to the invention is not used alone, but is connected to an analysis module or a conveyance module and used as a part of an automatic analysis system. Therefore, it is desirable to shorten the dimension in the lateral width direction which is the longitudinal direction of the automatic analysis system implemented by connecting various functional modules in series and which is the left-right direction with respect to the operator, that is, the conveyance direction of the container, because the configuration is suitable for miniaturization of the entire automatic analysis system. Hereinafter, the container storage device may be referred to as a QC specimen storage chamber or a QC specimen storage module.

Furthermore, the container storage device according to the invention is a storage device dedicated to QC specimens, so that the degree of freedom in an arrangement position relative to other functional modules is large according to the configuration of the automatic analysis system.

In addition, the quality control can be automated by additionally placing the QC specimen storage module according to the invention in the existing system that manually supplies the QC specimen. In this way, when the QC specimen storage module is additionally placed, the placement space may be limited, and therefore, a configuration in which the dimension in the lateral width direction corresponding to the conveyance direction of the specimen is shortened is desirable.

In the related art disclosed in PTL 1, the storage device is not a storage device dedicated to QC specimens, but is provided integrally with a clinical analyzer, and handling of a sample, attachment and detachment movement of an evaporation cover, and opening and closing of an insulated door assembly are performed by the same sample handling robot arm. Therefore, a series of operations are sequentially performed one by one, and a plurality of operations cannot be simultaneously performed. Therefore, there is a limit to increasing the processing speed per unit time, i.e., throughput. Furthermore, the insulated door assembly that is opened and closed when the sample is handled has a configuration in which the entire upper surface of the cooled refrigerated base assembly is opened, and therefore, there is a problem in that outside air at room temperature easily flows in and condensation easily occurs when the outside air is at high temperature and high humidity.

In the related art disclosed in PTL 2, a specimen rack buffer unit 21 which is a mechanism for holding the quality control sample in the device in a state of being placed in the rack is provided, and a configuration including an airtight case for individually storing the container of the quality control sample or a configuration for cooling and storing the quality control sample is not disclosed.

The invention has been made in view of the above, and an object of the invention is to provide a container storage device, an analysis system, and a container transfer method with which it is possible to cool a QC specimen container, stably store the QC specimen container for a long period of time, increase the number of specimen containers that can be stored in a storage chamber, while reducing the size in the lateral width direction, in particular, so as to allow miniaturization.

### Solution to Problem

The present application includes a plurality of aspects for solving the above-described problem, and an example thereof includes a housing which has a first side surface and a pair of second side surfaces respectively extending from both ends of the first side surface, a first conveyance path which is formed along the first side surface and through which a plurality of containers containing a liquid are conveyable, a cylindrical storage chamber surrounded by the first conveyance path and the pair of second side surfaces and configured to store the plurality of containers, and a second conveyance path through which the containers are conveyable between a first reception position on the first conveyance path and a second reception position in the storage chamber. A straight line connecting the first reception position and the second reception position in a plan view is formed obliquely to the first conveyance path.

### Advantageous Effects of Invention

The invention can provide a container storage device, an automatic analyzer, and a container transfer method with which a QC specimen can be stored for a long period of time, and the container storage device can be miniaturized, in particular, the lateral width size can be reduced while maximizing capacity of a storage chamber.

### Brief Description of Drawings

[FIG. 1] FIG. 1 is a schematic plan view of a container storage device according to a first embodiment.
[FIG. 2] FIG. 2 is a schematic side view of the container storage device according to the first embodiment.
[FIG. 3] FIG. 3 is a perspective view illustrating a configuration of a rack and a container according to the first embodiment.
[FIG. 4] FIG. 4 is a plan view of the container storage device according to the first embodiment.
[FIG. 5] FIG. 5 is a perspective view of the container storage device according to the first embodiment when viewed from a direction B.
[FIG. 6] FIG. 6 is a cross-sectional view of the container storage device according to the first embodiment taken along a line A-A.
[FIG. 7] FIG. 7 is a cross-sectional view of the container storage device according to the first embodiment taken along a line C-C.
[FIG. 8] FIG. 8 is a view illustrating a configuration and operation of a rack transfer mechanism according to the first embodiment as viewed in a direction of an arrow D.
[FIG. 9] FIG. 9 is a cross-sectional view taken along a line E-E illustrating a configuration and an operation of a second conveyance path according to the first embodiment.
[FIG. 10] FIG. 10 is a cross-sectional view taken along a line F-F illustrating a configuration of a container gripping mechanism and a shutter that are provided in the second conveyance path according to the first embodiment.
[FIG. 11] FIG. 11 is a cross-sectional view taken along a line F-F illustrating the configuration of the container gripping mechanism and the shutter that are provided in the second conveyance path according to the first embodiment.
[FIG. 12] FIG. 12 is a cross-sectional view taken along a line F-F illustrating a configuration of the container gripping mechanism and the shutter that are provided in the second conveyance path according to the first embodiment.
[FIG. 13] FIG. 13 is a plan view illustrating a relation between a first reception position and a rack position on a transfer line according to the first embodiment.
[FIG. 14] FIG. 14 is a schematic plan view illustrating an arrangement of the first reception position, a second reception position, and a central axis of a storage chamber according to the first embodiment.
[FIG. 15] FIG. 15 is a plan view illustrating a relation among the arrangement of the first reception position, the second reception position, and the central axis of the storage chamber according to the first embodiment, a stop angle deviation of a drum in the storage chamber, and an error of the second reception position.
[FIG. 16] FIG. 16 is a plan view illustrating a configuration and an initial state of a first conveyance path according to the first embodiment.
[FIG. 17] FIG. 17 is a plan view illustrating a configuration and operation of the first conveyance path according to the first embodiment.
[FIG. 18] FIG. 18 is a plan view illustrating a configuration and operation of the first conveyance path according to the first embodiment.
[FIG. 19] FIG. 19 is a plan view illustrating a configuration and operation of the first conveyance path according to the first embodiment.
[FIG. 20] FIG. 20 is a plan view illustrating a configuration and operation of the first conveyance path according to the first embodiment.
[FIG. 21] FIG. 21 is a plan view illustrating a configuration and operation of the first conveyance path according to the first embodiment.
[FIG. 22] FIG. 22 is a plan view illustrating a configuration and operation of the first conveyance path according to the first embodiment.
[FIG. 23] FIG. 23 is a plan view illustrating the configuration and operation of the first conveyance path according to the first embodiment.
[FIG. 24] FIG. 24 is a plan view illustrating a configuration and operation of the first conveyance path according to the first embodiment.
[FIG. 25] FIG. 25 is a plan view illustrating a configuration and operation of the first conveyance path according to the first embodiment.
[FIG. 26] FIG. 26 is a plan view illustrating a configuration and operation of the first conveyance path according to the first embodiment.
[FIG. 27] FIG. 27 is a plan view illustrating a configuration and operation of the first conveyance path according to the first embodiment.
[FIG. 28] FIG. 28 is a plan view illustrating a configuration and operation of the first conveyance path according to the first embodiment.
[FIG. 29] FIG. 29 is a plan view illustrating a configuration and operation of the first conveyance path according to the first embodiment.
[FIG. 30] FIG. 30 is a plan view illustrating a configuration and operation of the first conveyance path according to the first embodiment.
[FIG. 31] FIG. 31 is a plan view illustrating a configuration and operation of the first conveyance path according to the first embodiment.
[FIG. 32] FIG. 32 is a plan view illustrating a configuration and operation of the first conveyance path according to the first embodiment.
[FIG. 33] FIG. 33 is a cross-sectional view taken along a line G-G in FIG. 6, which illustrates an exhaust flow path according to the first embodiment.
[FIG. 34] FIG. 34 is a plan view of a container storage device according to a second embodiment.
[FIG. 35] FIG. 35 is a schematic plan view of a container storage device according to a third embodiment.
[FIG. 36] FIG. 36 is a schematic plan view of a container storage device according to a fourth embodiment.
[FIG. 37] FIG. 37 is a schematic plan view of a container storage device according to a fifth embodiment.
[FIG. 38] FIG. 38 is a schematic plan view of an automatic analysis system including a container storage device according to a sixth embodiment.
[FIG. 39] FIG. 39 is a schematic plan view of an automatic analysis system including a container storage device according to a seventh embodiment.
[FIG. 40] FIG. 40 is a schematic plan view of an automatic analysis system including a container storage device according to a seventh embodiment.
[FIG. 41] FIG. 41 is a schematic plan view of an automatic analysis system including a container storage device according to an eighth embodiment.

### Description of Embodiments

Hereinafter, embodiments according to the invention will be described with reference to the drawings.

### <First Embodiment>

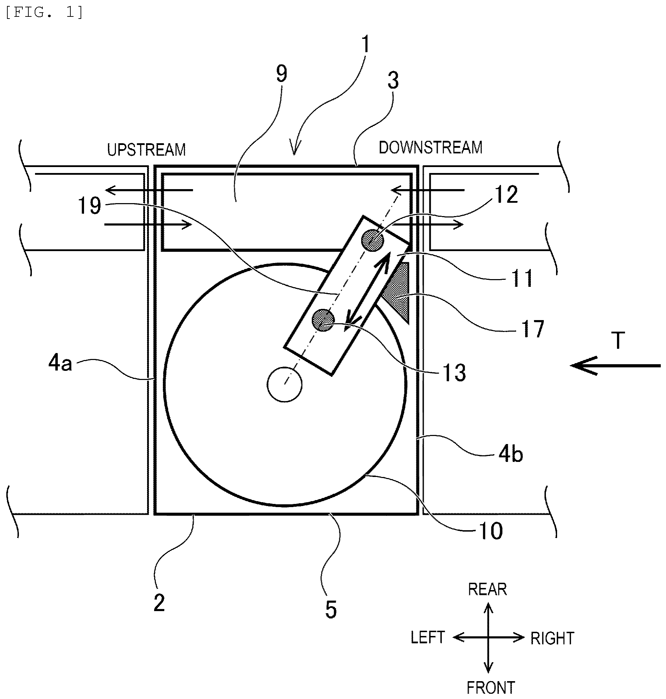

A first embodiment of the invention will be described in detail with reference to FIGS. 1 to 33.

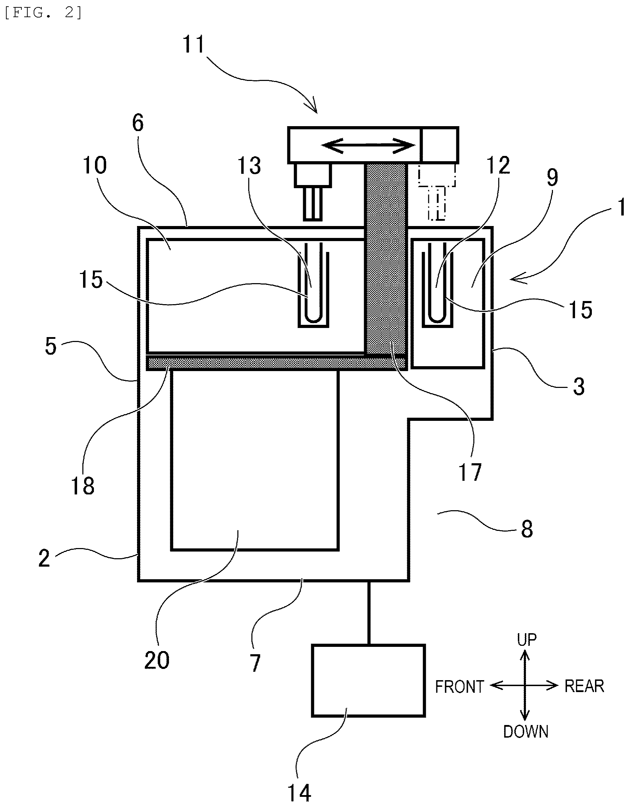

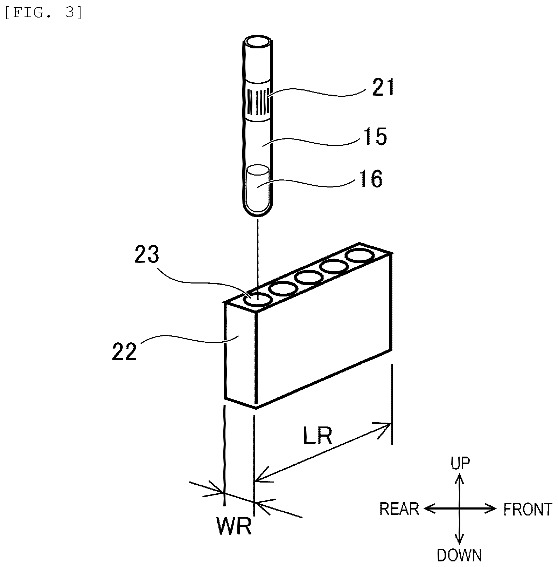

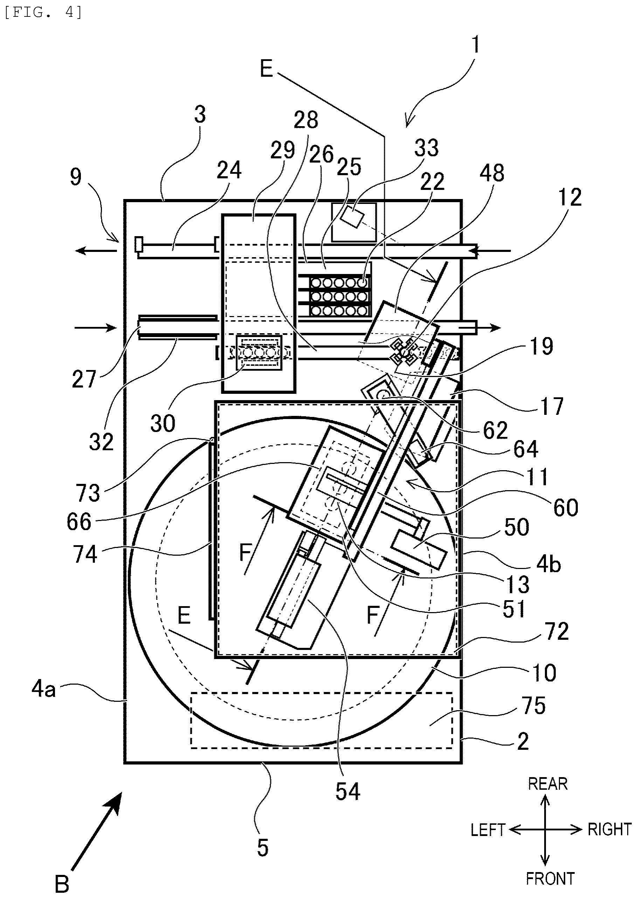

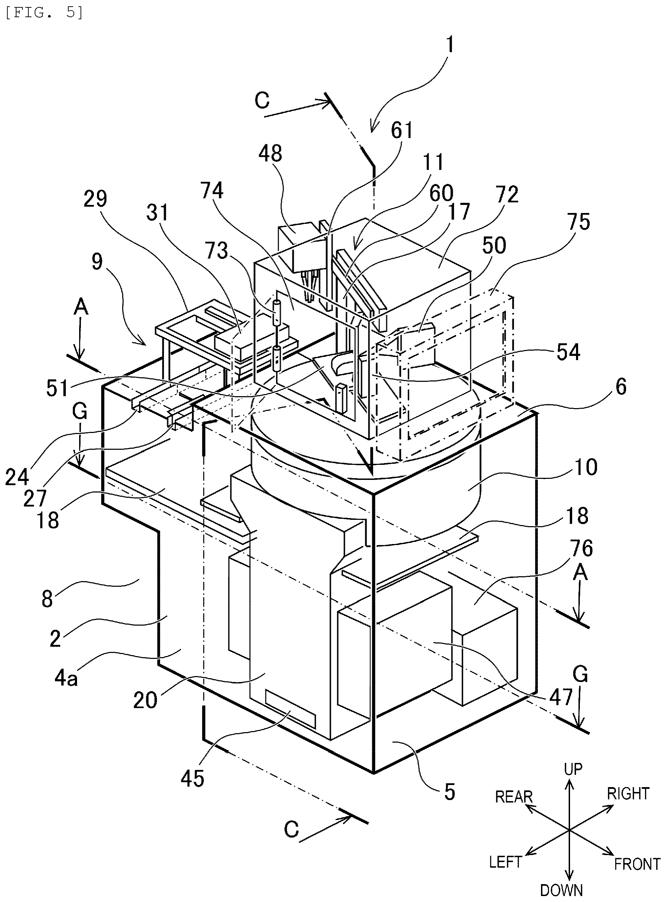

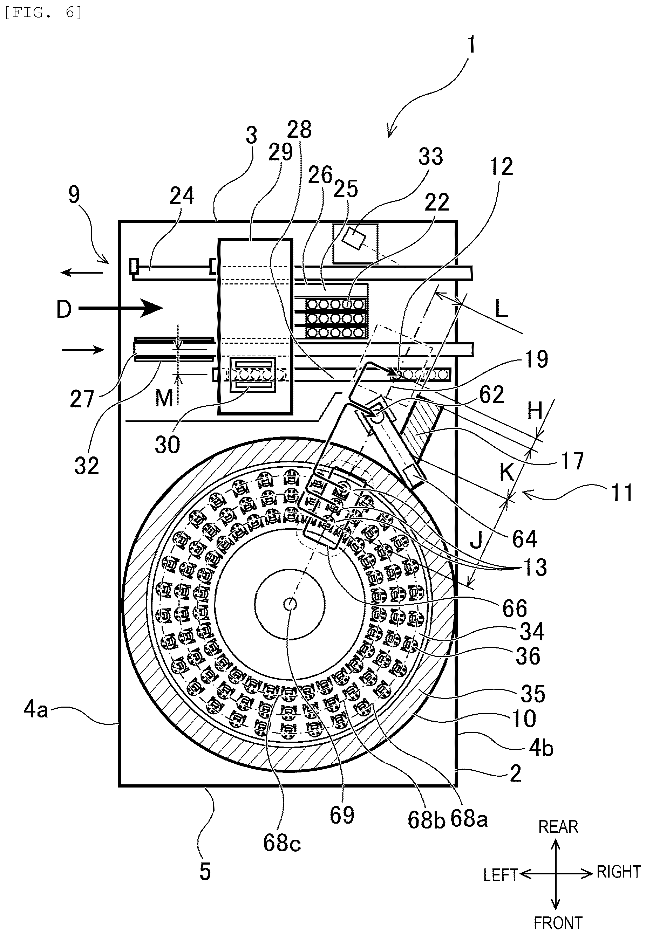

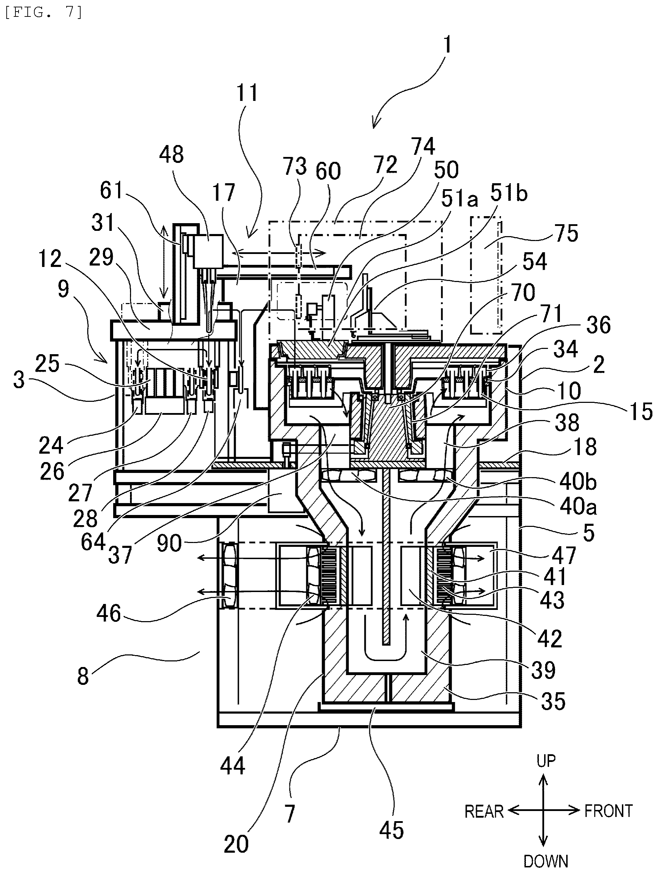

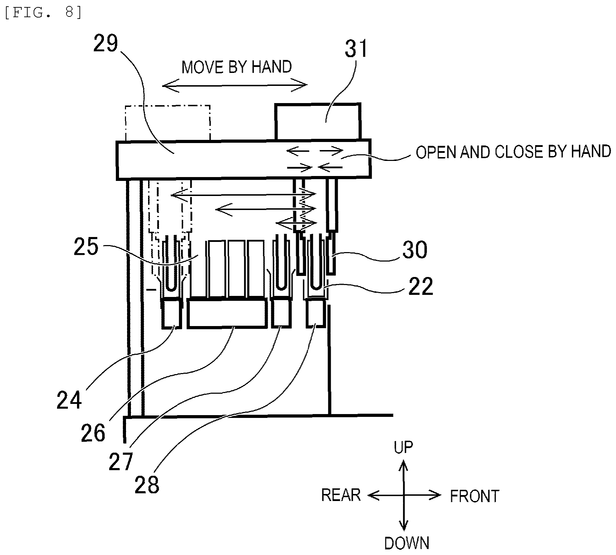

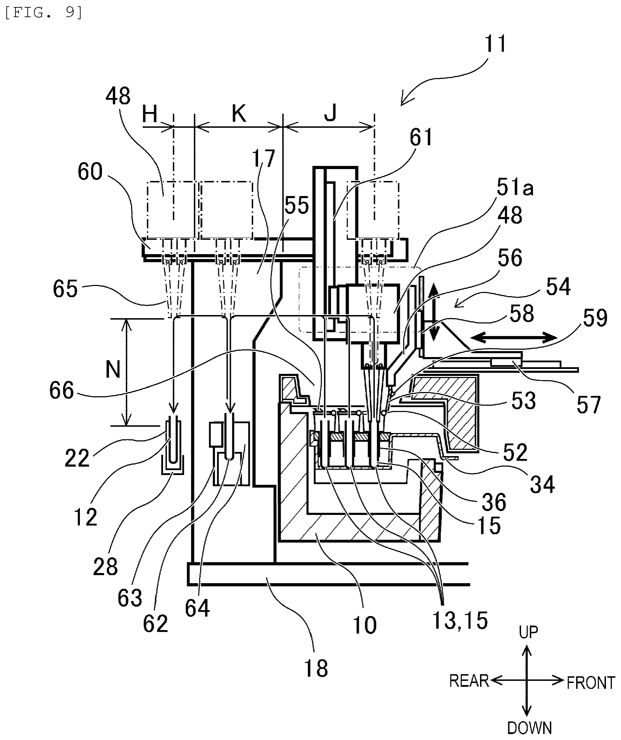

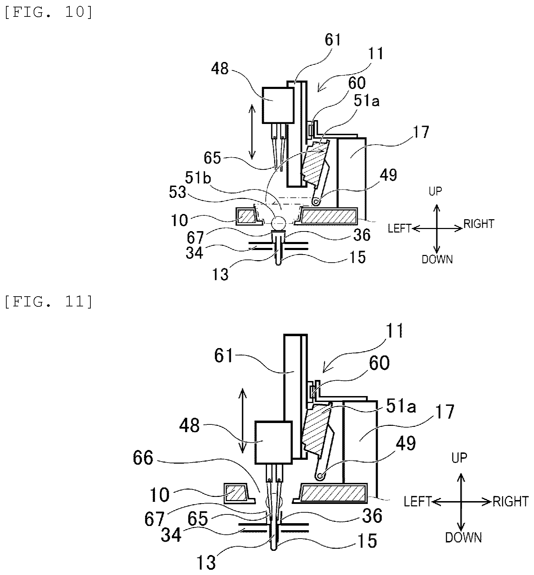

FIG. 1 is a schematic plan view of a container storage device according to the present embodiment. FIG. 2 is a view of the container storage device viewed in a direction of an arrow T in FIG. 1. FIG. 3 is a perspective view illustrating a configuration of a rack and a container. FIGS. 4 and 5 are a plan view and a perspective view of the container storage device. FIG. 6 is a cross-sectional view taken along a line A-A in FIG. 5. FIG. 7 is a cross-sectional view taken along a line C-C in FIG. 5. FIG. 8 is a view illustrating a configuration and an operation of a rack transfer hand as viewed in a direction of an arrow D. FIG. 9 is a cross-sectional view illustrating a configuration and an operation of the second conveyance path, which is taken along a line E-E in FIG. 4. FIGS. 10 to 12 are cross-sectional views illustrating a configuration of a container gripping mechanism and a shutter provided in the second conveyance path, which is taken along a line F-F in FIG. 4.

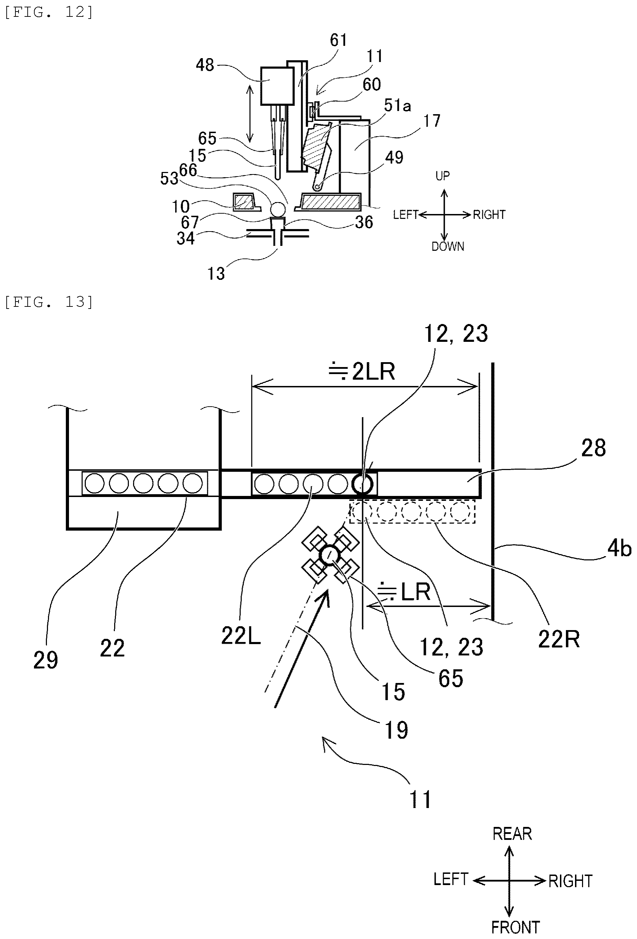

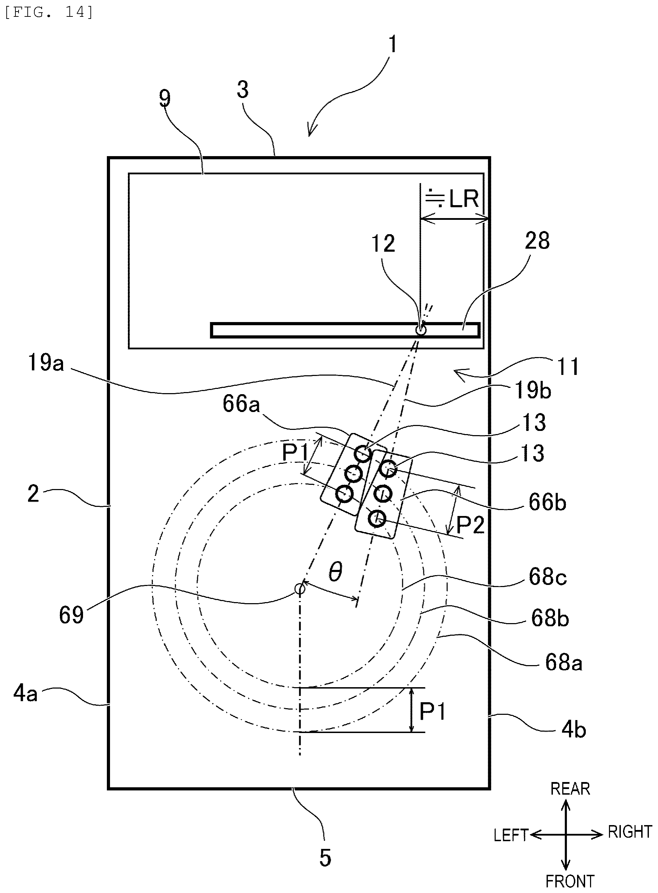

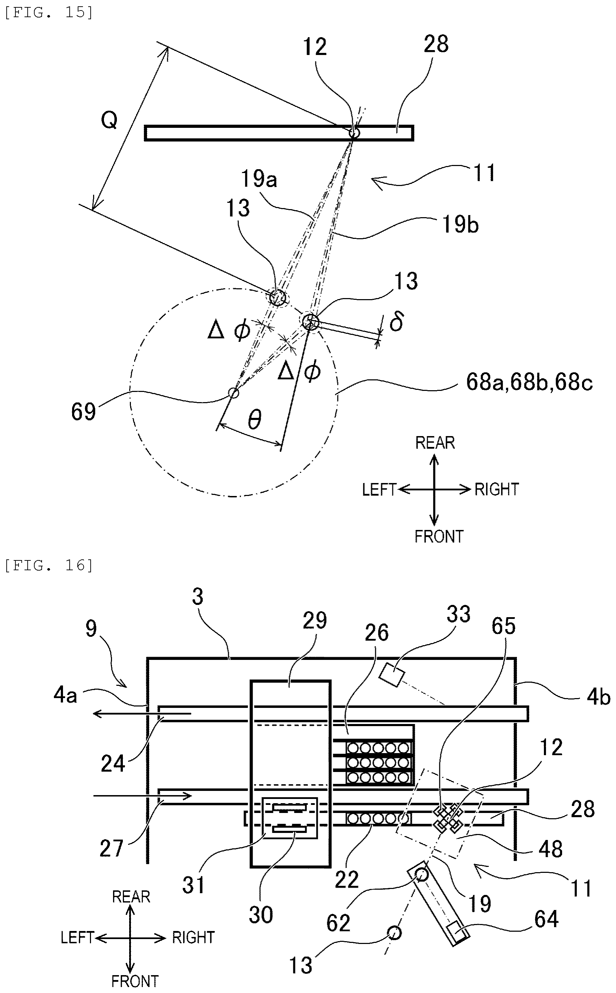

FIG. 13 is a plan view illustrating a relation among a transfer line, a first reception position, and a rack position on the transfer line. FIG. 14 is a schematic plan view illustrating an arrangement of the first reception position, the second reception position, and a central axis of a storage chamber. FIG. 15 is a plan view illustrating a relation among the arrangement of the first reception position, the second reception position, and the central axis of the storage chamber, a stop angle deviation of a drum in the storage chamber, and an error of the second reception position.

In the following description, up, down, left, right, front, and rear directions are based on up, down, left, right, front, and rear directions illustrated in FIGS. 1 and 2. The left-right direction is a conveyance direction of the rack on which the container is placed, and indicates a width direction of the container storage device or an automatic analysis system. Furthermore, a left side of the rack may be referred to as upstream and a right side may be referred to as downstream with respect to a direction in which the rack is conveyed from left to right. A standard sample and a quality control sample may be collectively referred to as a QC specimen or a QC specimen sample. A container may be referred to as a specimen container or a QC specimen container.

### (Basic Configuration)

A schematic configuration of a container storage device according to the present embodiment will be described with reference to FIGS. 1 and 2.

A container storage device 1 includes a housing 2 having a substantially rectangular parallelepiped shape, and the housing 2 includes a first side surface 3 which is a rear surface, a pair of second side surfaces 4a and 4b provided in the front-rear direction on both left and right sides of the first side surface 3, a third side surface 5 which is a front surface, an upper surface 6, a bottom surface 7, and a back-surface recessed portion 8 which is a space formed by cutting out a lower side of the rear surface of the housing 2.

A conveyance path connected to the outside or an analyzer is connected to the left and right second side surfaces 4a and 4b, and a rack (details will be described below) on which a specimen container or a container is placed can be carried in and out to and from the outside.

A first conveyance path 9 that conveys the rack in a left-right direction along the first side surface 3 is provided inside the housing 2.

A cylindrical storage chamber 10 having a central axis in a vertical direction is provided in a space adjacent to the front of the first conveyance path 9 and sandwiched between the pair of left and right second side surfaces 4a and 4b.

A second conveyance path 11 can convey and transfer a container 15 containing a QC specimen 16 between a first reception position 12 provided in the first conveyance path 9 and a second reception position 13 provided in the storage chamber 10.

The control device 14 includes, for example, a control computer, a drive circuit of each drive motor, a control circuit of a barcode reader, a storage device of a read barcode, a signal detection circuit by various sensors, a control circuit of a cooling device, and a display circuit of a monitor, and controls various operations of the container storage device 1.

### (Storage Chamber)

A plurality of containers 15 containing specimens are held in the cylindrical storage chamber 10, which will be described in detail, and the container 15 located at the second reception position 13 is accessible via the second conveyance path 11. The second conveyance path 11 allows the containers 15 to be taken out from the storage chamber 10 and transferred to the first reception position 12 provided in the first conveyance path 9, and allows the containers 15 to be taken out from the first reception position 12 and carried into the storage chamber 10.

### (Container Transfer Trajectory)

Here, a straight line connecting the first reception position 12 and the second reception position 13 in a plan view may be referred to as a container transfer trajectory 19.

### (Support Column: Rigidity)

The second conveyance path 11 allows the container 15 to be taken out from the inside of the storage chamber 10 and conveyed to the first conveyance path 9, and therefore, the second conveyance path 11 is provided above the upper surface 6 so that a bottom surface of the conveyed container 15 is higher than the upper surface 6. Therefore, the second conveyance path 11 is supported by a second conveyance path support column 17. Further, the container 15 needs to be accurately conveyed to the first reception position 12 and the second reception position 13, and therefore, the second conveyance path 11 is required to have accuracy and rigidity. Therefore, a base member 18 made of, for example, an aluminum thick plate is provided, and the second conveyance path support column 17 that supports the storage chamber 10 and the second conveyance path 11 is firmly attached to the base member 18.

In order to increase the rigidity of the second conveyance path support column 17, it is desirable to provide the second conveyance path support column 17 at a portion where a thick column can be disposed. That is, a K dimension (see FIG. 6) of the second conveyance path support column 17 in a direction along the second conveyance path 11 is large.

Further, shortening the second conveyance path 11 by bringing the first reception position 12 and the second reception position 13 close to each other, reducing the so-called overhang amount, that is, an H dimension and a J dimension in FIG. 6 by providing the first reception position 12 and the second reception position 13 with the second conveyance path support column 17 interposed therebetween, and reducing an L dimension by bringing the second conveyance path support column 17 and the container transfer trajectory 19 close to each other also contribute to making deformation less likely and improving rigidity.

### (Second Conveyance Path Support Column)

The cylindrical storage chamber 10 is housed in a substantially square rectangular region surrounded by the first conveyance path 9, the pair of left and right second side surfaces 4a and 4b, and the third side surface 5 which is the front surface, and therefore, substantially triangular spaces are generated inside the four corners of the rectangular region, respectively. Therefore, it is desirable to provide the second conveyance path support column 17 in the triangular region, and the first reception position 12 is provided in the first conveyance path 9, and therefore, it is desirable that the second conveyance path support column 17 is erected in a space surrounded by the first conveyance path 9, the second side surface 4, and the storage chamber 10, which is close to the first conveyance path 9. This space is present symmetrically on an upstream side and a downstream side of the first conveyance path 9, and therefore, the first reception position 12 and the second conveyance path support column 17 are provided on the downstream side in the present embodiment. Note that the reason why it is preferable to provide the first reception position 12 and the second conveyance path support column 17 on the downstream side will be described below.

### (Second Reception Position)

It is desirable that the second reception position 13 is disposed on a straight line connecting the first reception position 12 and a center of the storage chamber 10. In addition, the second reception position 13 is desirably provided between the center of the storage chamber 10 and the second conveyance path support column 17 because it is desirable to dispose the second reception position 13 close to the second conveyance path support column 17 from the viewpoint of increasing rigidity and improving accuracy. Details will be described below.

### (Inclined Arrangement)

The first reception position 12 is located downstream of the first conveyance path 9 in a vicinity of the second conveyance path support column 17, and the container transfer trajectory 19 including the second reception position 13 passes through the center of the storage chamber 10, and therefore, the container transfer trajectory 19 is inclined towards the downstream side relative to the first conveyance path 9. The second conveyance path 11 is parallel to the container transfer trajectory 19, and therefore, the second conveyance path 11 is inclined relative to the first conveyance path 9. In other words, the second conveyance path 11 is also inclined relative to the second side surfaces 4a and 4b.

### (Effect: Reduction in Width)

The storage chamber 10 is provided close to the inside of the pair of left and right second side surfaces 4a and 4b, and therefore, the maximum width of the container storage device 1 is substantially equal to the diameter of the storage chamber 10, and the width of the container storage device 1 can be reduced to achieve miniaturization.

Configurations of the first conveyance path 9, the second conveyance path 11, the storage chamber 10, the first reception position 12, the second reception position 13, and a cooling unit 20 will be described in detail with reference to FIG. 4 and subsequent drawings.

### (Container Storage Device: Detailed Configuration)

The configuration of the container storage device 1 will be described in detail with reference to FIGS. 3 to 12.

### (Rack)

In FIG. 3, a barcode 21 for identifying the specimen is added to the bottomed cylindrical container 15 accommodating the QC specimen 16. The rack 22 has a rectangular parallelepiped shape, and for example, five containers 15 can be inserted and held in a row in a longitudinal direction through insertion holes 23 provided in the upper surface. In the first conveyance path 9, handling such as conveyance and transfer is performed in units of racks 22. The rack 22 has a longitudinal dimension LR and a width dimension WR. The container 15 may be referred to as a QC specimen container.

### (First Conveyance Path)

In FIGS. 4 to 12, the first conveyance path 9 includes a returning conveyance path 24 that conveys the rack 22 from the downstream side to the upstream side, an empty rack buffer 26 which includes a plurality of slots 25 and in which the empty rack 22 can be set in advance in each slot 25, a main conveyance path 27 that conveys the rack 22 from the upstream side to the downstream side, and a transfer line 28 that includes the first reception position 12 and places the container 15 conveyed by the second conveyance path 11 on the rack 22 or takes out the container 15 by the second conveyance path 11 from the rack 22 in parallel to each other in the left-right direction, in order from the side close to the first side surface 3 along the first side surface 3 that is the rear surface.

That is, the transfer line 28 is provided closest to the storage chamber 10. Further, the main conveyance path 27 and the transfer line 28 are provided with a predetermined distance M therebetween so as not to interfere with the rack 22 conveyed on the main conveyance path 27 even while the container 15 is placed on or taken out, by the action of the second conveyance path 11, from the rack 22 placed on the transfer line 28.

The main conveyance path 27, the returning conveyance path 24, and the transfer line 28 include, for example, endless conveyance belts stretched in the left-right direction, and are configured to convey the rack 22 placed on the conveyance belts in the left-right direction by rotating pulleys with a drive force of a motor (not shown).

In the present embodiment, the empty rack buffer 26 includes four slots 25 capable of supporting the rack 22 in each slot groove, and a maximum of four racks 22 can be arranged side by side in the front-rear direction.

### (Rack Hand)

In FIGS. 4 to 8, a rack transfer mechanism 29 is provided perpendicularly to the main conveyance path 27, the returning conveyance path 24, and the transfer line 28, extending in the front-rear direction, and can grip the rack 22 and transfer the rack 22 mutually among the main conveyance path 27, the returning conveyance path 24, the transfer line 28, and the empty rack buffer 26.

The empty rack buffer 26 described above includes a rack moving mechanism (not shown) that can move the rack 22 between the empty rack buffer 26 and the rack transfer mechanism 29 in the left-right direction and is driven by a motor (not shown).

The main conveyance path 27 and the returning conveyance path 24 are provided over the entire width across the pair of left and right second side surfaces 4a and 4b of the container storage device 1, and the rack 22 can be conveyed to/from external conveyance devices or analyzers connected to the left and right side surfaces of the container storage device 1.

As illustrated in FIG. 8, there is provided a hand opening and closing mechanism 31 that opens and closes a pair of hands 30 capable of gripping or separating the rack 22 from each other in the front-rear direction by a drive force of, for example, a stepping motor (not shown). The hand opening and closing mechanism 31 is supported to be movable in the front-rear direction along the rack transfer mechanism 29, and is driven by, for example, a stepping motor (not shown). The rack transfer mechanism 29 is provided above the first conveyance path 9.

By driving the rack transfer mechanism 29 in a state in which the hand 30 is closed and the rack 22 is gripped, the rack 22 is horizontally moved mutually among the transfer line 28, the main conveyance path 27, the empty rack buffer 26, and the returning conveyance path 24, and the rack 22 is released and transferred by opening the hand 30 at a movement destination.

An example of a movement range in the front-rear direction of the rack 22 gripped by the hand 30 is schematically indicated by a double-headed arrow in the drawing.

### (Transfer Line)

The transfer line 28 is provided in the left-right direction in a range from a left end surface of the rack transfer mechanism 29 to the second side surface 4b which is a right side surface of the housing 2, and includes an endless belt that is capable of conveying the rack 22 in the range, and is, for example, driven by a motor. The container 15 transferred by the second conveyance path 11 can be placed on the rack 22 at the first reception position 12, which is an intersection with the container transfer trajectory 19. Similarly, at the first reception position 12, the container 15 placed on the rack 22 can be delivered to the second conveyance path 11.

Further, the rack 22 on which the container 15 is placed can be transferred to the main conveyance path 27 or the returning conveyance path 24 via the rack transfer mechanism 29, and the empty rack 22 can be transferred to the empty rack buffer 26.

### (STAT Port)

A short turn around time (STAT) port 32 for loading the rack 22 for emergency processing on which a specimen to be analyzed with priority over the already loaded sample is placed is provided on an upstream side corresponding to a left end portion of the main conveyance path 27.

The reason why the STAT port 32 is disposed on the upstream side is that, since the rack is conveyed from the left to the right in the main conveyance path 27, when another module is connected to the downstream side of the container storage device 1 and the container storage device 1 is disposed on the most upstream side, the second side surface 4a, which is the left side surface, becomes an end surface to which nothing is connected, so that the second side surface 4a is located at a position that is most easily accessed by an operator.

Therefore, it is preferable that the STAT port 32 is provided on the upstream side of the main conveyance path 27, and the second conveyance path support column 17 that supports the second conveyance path 11 is provided on the downstream side of the main conveyance path 27, which is opposite to the STAT port 32.

### (Barcode Reader)

Between the returning conveyance path 24 and the first side surface, a barcode reader 33 is provided on the downstream side of the returning conveyance path 24, that is, in the direction in which the rack 22 is conveyed toward the container storage device 1. A barcode provided on the rack 22 conveyed and returned from the adjacently connected analyzer via the returning conveyance path 24 is read and sent to the control device 14, so that the type and individual number of the rack 22 can be identified.

### (Storage Chamber)

The configuration of the storage chamber 10 will be described with reference to FIGS. 4 to 7.

The storage chamber 10 is provided in a cylindrical shape around a storage chamber central axis 69 facing the vertical direction, and is provided close to the inside of the first conveyance path 9 and the pair of left and right second side surfaces 4a and 4b. In order to maintain the inside of the storage chamber 10 at a low temperature, for example, 10°C or lower, the outer cylindrical surface, the upper surface, and the lower surface are covered with a heat insulator 35 having a low thermal conductivity. A disk-shaped disk 34 rotatably supported around a disk supporting shaft 70 provided coaxially with the storage chamber central axis 69 is provided inside the storage chamber 10. The disk 34 is connected via a disk drive shaft 71 to a drive motor, such as a stepping motor 90, to be rotatable via a timing belt, and can be stopped at a predetermined angle position by an angle detection sensor (not shown). A plurality of container cases 36 are arranged on the disk 34 concentrically and radially about the central axis of the storage chamber 10, and a QC specimen container 15 is stored in each of the container cases 36. In the present embodiment, the container cases 36 are arranged in a plurality of rows along three concentric circles, that is, an outer circumference circle 68a, a middle circumference circle 68b, and an inner circumference circle 68c.

The disk 34 is rotated and stopped at a position at which the central axis of the QC specimen container 15 stored in a predetermined container case 36 provided in the storage chamber 10 coincides with the container transfer trajectory 19, so that the predetermined QC specimen container 15 can be arranged at the second reception position 13.

### (Cooling Unit 20)

As shown in FIGS. 5 and 7, in order to cool the inside of the storage chamber 10, a cooling unit 20 is connected to a lower surface of the storage chamber 10. The cooling unit 20 includes a substantially U-shaped cool air duct 39 that is connected to a bottom surface of the storage chamber 10 with one side covered with the heat insulator 35 as an intake port 37 and the other side as a discharge port 38, a cool air blowing fan 40a for introducing the air inside the storage chamber 10 into the cool air duct 39 via the intake port 37, and a cool air blowing fan 40b for blowing the air cooled in the cool air duct 39 into the storage chamber 10 via the discharge port 38.

For example, a cooling fin 42 provided in contact with a low-temperature side of a cooling element 41 which is a Peltier element generating a temperature difference by applying a voltage is provided on an inner wall of the cool air duct 39 and protrudes into the cool air duct 39, and cools air blown in the cool air duct 39. A heat-dissipation fin 43 provided in contact with a high-temperature side of the cooling element 41 is arranged toward the outside of the cool air duct, and heat is dissipated by a heat-dissipation fan 44.

Since dew condensation water generated on a wall surface in the cool air duct 39 may be accumulated on a bottom surface of the cooling unit 20, a drain tray 45 that receives the dew condensation water is provided on the bottom surface, and the dew condensation water can be drawn out to the second side surface 4b side and drained.

An exhaust fan 46 is provided in the back-surface recessed portion 8 provided in a rear surface of the housing 2, and the high-temperature exhaust air dissipated by the heat-dissipation fan 44 is exhausted to the back-surface recessed portion 8 by the exhaust fan 46 through an exhaust hot air path 47 connecting the heat-dissipation fan 44 and the exhaust fan 46.

In the present embodiment, a configuration in which the two cooling elements 41 are provided along the substantially U-shaped cool air duct 39 is shown, but the invention is not limited to the two cooling elements 41. A configuration in which only one cooling element 41 is provided or three or more cooling elements 41 are arranged in series or in parallel may be adopted depending on the required cooling capacity.

### (Shutter)

An opening 66 is provided in a vicinity of the second reception position 13 on the upper surface of the storage chamber 10 so that the container 15 can be taken out upward from the second reception position 13. In the present embodiment, the opening 66 has a rectangular shape. One side of the rectangular shape is parallel to the container transfer trajectory 19, and the other side thereof is shorter than the one side and perpendicular to the container transfer trajectory 19. In the present embodiment, a length of the one side is set such that the outermost circumference and innermost circumference container cases 36 among the container cases 36 arranged in a triple concentric circular shape are exposed in a plan view, and the length of the other side is set such that one of the container cases 36 is exposed in a plan view. The opening dimension is set such that the container 15 can be placed in the container case 36 or can be taken out from the container case 36 by the container gripping mechanism 48 to be described below.

Hereinafter, one side of the opening 66 may be referred to as a long side, and the other side may be referred to as a short side.

The opening 66 is provided with a shutter 51 that is rotatably supported around a shutter supporting shaft 49 parallel to the long side and is opened and closed by a shutter opening and closing mechanism 50 including a motor (not shown) . When the shutter 51 (51b) is closed, an airtight sealing material 67 (not shown) is provided around the shutter 51 to seal a space between the opening 66 of the storage chamber 10 and the shutter 51 so that the outside air does not enter the cooled storage chamber 10.

When the shutter 51 (51a) is fully opened, as illustrated in FIGS. 10 to 12, the shutter 51 is opened to the outside of a projection plane of the opening 66 in the vertical direction, so that gripping and removal of the container 15 in the container case 36 by the container gripping mechanism 48 are not hindered.

### (Container Opening and Closing Lid)

In the present embodiment, the container 15 is held in the container case 36 including an opening and closing lid 53 pivotally supported on the upper surface around the lid supporting shaft 52 so as to be openable and closable, and is stored in the storage chamber 10.

When the opening and closing lid 53 is closed, evaporation of the specimen in the container case 36 is prevented by the airtight sealing material 67 that maintains the space between the container case 36 and the airtight sealing material 67.

The opening and closing lid 53 is pivotally supported to be openable and closable around a lid supporting shaft 52 provided at one end of the opening and closing lid 53, and a lid opening claw receiving portion 55 on which a lid opening and closing mechanism 54 acts is provided at the other end of the opening and closing lid 53.

### (Cap-OC Mechanism: Lid Opening and Closing Mechanism)

A lid opening and closing mechanism 54 is provided, which can open and close the opening and closing lid 53 in a state in which the opening 66 is exposed by opening the shutter 51 by the operation of the shutter opening and closing mechanism 50, in order to take out the container 15 stored in the container case 36. In the present embodiment, the lid opening and closing mechanism 54 is located on an extension line of the container transfer trajectory 19 and on an opposite side of the first conveyance path 9 relative to the opening 66.

As illustrated in FIG. 9, the lid opening and closing mechanism 54 is provided with a lid opening and closing arm 56 acting on the opening and closing lid 53, and the lid opening and closing arm 56 enables a horizontal movement parallel to the container transfer trajectory 19 by a motor (not shown) along an arm horizontal moving rail 57 and a vertical movement by a motor (not shown) along an arm up and down moving rail 58.

A lid opening claw 59 that can be engaged with and disengaged from the lid opening claw receiving portion 55 provided on the opening and closing lid 53 is provided at a lower end of the lid opening and closing arm 56. The lid opening and closing arm 56 is horizontally moved to the position of the opening and closing lid 53 to be opened and closed and is lowered, the lid opening claw 59 at the lower end is inserted into the opening 66 to be engaged with the lid opening claw receiving portion 55, and the lid opening and closing arm 56 is lifted upward and moved forward, so that the opening and closing lid 53 can be rotated around the lid supporting shaft 52 and opened. The opening and closing lid 53 can also be closed by a reverse operation.

### (Second Conveyance Path)

The configuration of the second conveyance path 11 will be described with reference to FIGS. 4 to 7 and 9 to 12.

As described above, the second conveyance path 11 is fixed and supported by the second conveyance path support column 17 erected in the substantially triangular region surrounded by the first conveyance path 9, the second side surface 4b of the housing 2, and the storage chamber 10 so as to be separated upward from the upper surface of the storage chamber 10. The second conveyance path 11 includes a conveyance rail 60 provided parallel to the container transfer trajectory 19 that is a straight line connecting the first reception position 12 and the second reception position 13 in a plan view, and the container gripping mechanism 48 that is movable between the first reception position 12 and the second reception position 13 along the conveyance rail 60 by being driven by a motor (not shown), is supported by an up and down moving rail 61 so as to be movable in the up-down direction, and is movable in the up-down direction by being driven by a motor (not shown).

The container transfer trajectory 19 is a trajectory along which the container 15 is conveyed, and means a reference line of the second conveyance path 11.

The conveyance rail 60 is disposed at a position higher than the maximum height of the shutter 51 when the shutter 51 is fully opened so as not to interfere with the shutter 51 when the shutter 51 is fully opened.

The conveyance rail 60 can be implemented by a so-called single-axis slide rail that is movable in one direction, so that the configuration is simple, and the conveyance rail 60 is fixedly supported in the vicinity of the second conveyance path support column 17. Therefore, high rigidity and high accuracy are easily obtained.

### (Third Reception Position: Barcode Reader)

The container storage chamber 10 in the present embodiment may further include a third reception position 62 of the container 15 between the first reception position 12 and the second reception position 13 provided along the second conveyance path 11 and between the storage chamber 10 and the first conveyance path 9. The third reception position 62 includes a container placing unit 63 on which the container 15 is placed and a barcode reader 64 that reads the barcode 21 attached to the container 15. Needless to say, the third reception position 62 is located on the container transfer trajectory 19.

In FIGS. 6 and 9, the movement of the container 15 conveyed from the second reception position 13 to the first reception position 12 via the third reception position 62 is schematically indicated by an arrow. For the sake of illustration, the arrows in FIG. 6 indicate the movement of the container 15 in the up-down direction by schematically changing the movement in the up-down direction by 90° like an operation of temporarily separating from the container transfer trajectory 19 in the horizontal direction. Needless to say, as shown in FIG. 9, the container 15 moves in the horizontal plane along the container transfer trajectory 19, and only moves in the up-down direction without moving in the horizontal plane at the first reception position 12, the second reception position 13, and the third reception position 62.

### (Container Gripping Mechanism)

The configuration of the container gripping mechanism 48 will be described with reference to FIGS. 9 to 12.

The container gripping mechanism 48 is supported by the up and down moving rail 61 for a gripping mechanism so as to be vertically movable, and is driven by a motor (not shown) to be vertically movable.

The container gripping mechanism 48 is movable by a distance N between a lower end position at which the container 15 is placed in the first reception position 12, the second reception position 13, and the third reception position 62, and an upper end position at which a lower end of the container 15 is at least higher than an upper surface of the storage chamber 10 and at which the container 15 does not interfere with other constituent members when the container 15 is horizontally moved between the first reception position 12 and the second reception position 13.

Lower end portions of the container gripping mechanism 48 are container gripping claws 65 that are radially arranged and can be opened and closed, and are configured to be movable, by being driven by a motor (not shown), between an open position at which an opening amount of the container gripping claw 65 is larger than a diameter of the container 15 and a gripping position at which the container 15 is gripped with a predetermined force.

The present embodiment illustrates an example in which four container gripping claws 65 are arranged for each 90°, but the number of claws is not limited to four, and may be three or two facing claws as long as the container 15 can be gripped and opened.

### (Container Gripping Operation)

An operation of gripping and taking out the container 15 in the container case 36 at the second reception position 13 by the container gripping mechanism 48 will be described with reference to FIGS. 10 to 12.

Here, as the second reception position 13, there are not only one position in the case where the container cases 36 are arranged in multiple concentric circles as in the present embodiment, but also one position on each of the inner circumference, the middle circumference, and the outer circumference in the case where the container cases 36 are arranged in triple concentric circles, that is, three positions in total, and any one of the container cases 36 is selected.

An operation of gripping the container 15 by the container gripping mechanism 48 will be described with reference to FIGS. 10 to 12.

In FIG. 10, the shutter 51 is fully opened by the action of the shutter opening and closing mechanism 50 to open the opening 66, and the container gripping mechanism 48 is located immediately above the second reception position 13, that is, the container case 36 and the container 15.

FIG. 11 illustrates a position where the container gripping mechanism 48 is lowered to the lower end position. When the container gripping mechanism 48 is lowered, the container gripping claw 65 is opened, the inside of the container gripping claw 65 is larger than the diameter of the container 15, the outside of the container gripping claw 65 is smaller than the inner circumference of the container case 36, and the container gripping claw 65 is inserted between the container 15 and the container case 36. The container gripping claw 65 grips the container 15 with a predetermined force by closing the container gripping claw 65 at the lower end position of the container gripping mechanism 48.

FIG. 12 illustrates a state in which the container gripping mechanism 48 is raised to the upper end position while the container 15 is gripped with a predetermined force.

Conversely, when the container gripping mechanism 48 is lowered from the upper end position to the lower end position shown in FIG. 11 in a state in which the container 15 is gripped with a predetermined force as shown in FIG. 12, and then the container gripping mechanism 48 is raised to the upper end position after the container gripping claw 65 is opened, the container 15 is held in the container case 36, and thus the state shown in FIG. 10 is obtained.

### (Movement from Second Reception Position to First Reception Position)

That is, in a state in which the container gripping claw 65 grips the container 15 at the second reception position 13, the container gripping mechanism 48 vertically operates along the up and down moving rail 61 for the gripping mechanism, so that the container 15 can be inserted into or removed from the container case 36. Further, the container gripping mechanism 48 is raised to the upper end position in a state in which the container 15 is gripped, the container gripping mechanism 48 is horizontally moved along the conveyance rail 60 to convey the container 15 to the first reception position 12 along the container transfer trajectory 19, and the container gripping mechanism 48 is lowered to the first reception position 12 to place the container 15 on the rack 22.

Next, the gripping of the container 15 is released by opening the container gripping claws 65, and then when the container gripping mechanism 48 is raised, the container 15 located at the second reception position 13 in the storage container 15 can be moved to the first reception position 12 on the transfer line 28. When the reverse operation is performed, the container 15 located at the first reception position 12 can be moved to the second reception position 13.

### (Preferable Position of First Reception Position)

Next, a preferred position of the first reception position 12 provided on the transfer line 28 provided in the first conveyance path 9 will be described with reference to FIG. 13.

The first reception position is located at an intersection of the transfer line 28 and the container transfer trajectory 19, which is a reference line of the second conveyance path 11, and is a position at which the container 15 is placed on the rack 22 from the second conveyance path 11. In the present embodiment, as illustrated in FIG. 3, an example is shown in which five containers 15 are placed in a row in the rack 22, and five insertion holes 23 for the containers are provided.

As described above, the second conveyance path 11 is provided close to the second conveyance path support column 17 disposed in the substantially triangular region surrounded by the first conveyance path 9, the second side surface 4b, which is the right side surface of the housing 2, and the storage chamber 10, and the STAT port 32 is provided upstream of the main conveyance path 27 of the first conveyance path 9, and therefore, the second conveyance path support column 17 is provided downstream of the main conveyance path 27, that is, in the vicinity of the second side surface 4b, which is the right side surface.

To describe the position of the rack 22 when the container 15 is to be placed on the rack 22 on the transfer line 28, the rack 22 is required to be located at a rack left end position 22L when the container 15 is to be inserted into the insertion hole 23 located on the rightmost side of the rack 22. On the other hand, when the container 15 is to be inserted into the insertion hole 23 located on the leftmost side of the rack 22, the rack 22 is required to be located at a rack right end position 22R. Note that, in FIG. 13, the illustration of the rack right end position 22R is shifted from the transfer line 28 for easy understanding. In order to respectively place the containers 15 in the five insertion holes 23 in the rack 22, the rack 22 needs to be movable on the transfer line 28 within a range from the rack left end position 22L to the rack right end position 22R. That is, the required movement range of the rack 22 here is approximately twice the longitudinal dimension of the rack 22.

In addition, in the movement range, the rack 22 must not protrude outside the housing 2, and must be disposed with a gap with respect to the rack transfer mechanism 29 so as not to hinder the operation of the rack transfer mechanism 29.

That is, in order to prevent the rack 22 from protruding from the second side surface 4b of the housing 2 even when the rack 22 is placed at the rack right end position 22R, it is preferable that the first reception position 12 is disposed at a position separated leftward from the second side surface 4b by substantially the length dimension of the rack 22. The right side surface of the rack transfer mechanism 29 is desirably separated leftward from the second side surface 4b of the housing 2 by twice or more the longitudinal dimension of the rack 22.

### (Vertical and Horizontal Dimensions of Container Storage Device)

### (First Conveyance Path)

An arrangement range of the rack transfer mechanism 29 needs to be provided in a range on the downstream side of the STAT port 32 requiring a longitudinal dimension of the rack 22 or more from the second side surface 4a and on the upstream side about twice the longitudinal dimension of the rack 22 from the second side surface 4b. The rack transfer mechanism 29 grips the rack 22 and transfers the rack 22 in a direction perpendicular to the first conveyance path 9, and therefore, the rack transfer mechanism 29 is required to have a left-right direction dimension equal to or larger than the longitudinal dimension of the rack 22.

That is, the first conveyance path 9 is preferably arranged in the order of the STAT port 32, the rack transfer mechanism 29, and the required movement range of the rack 22 for placing the container 15 at the first reception position 12 from the left end as the configuration in the left-right direction which is the conveyance direction of the rack 22. The width of the STAT port 32 and the rack transfer mechanism 29 in the left-right direction is required to not only account for the longitudinal dimension of the rack 22 but also include clearance for adjacent mechanisms and dimensional allowances for respective drive mechanisms and detection sensors thereof. For example, a margin of approximately 15 mm on each side may be reserved. When the width dimension of the rack 22 is, for example, about 120 mm, the required width of each of the STAT port 32 and the rack transfer mechanism 29 is, for example, about 150 mm. Therefore, the left-right width required for arranging the STAT port 32 and the rack transfer mechanism 29 is about 300 mm.

Since the required movement range of the rack 22 for placing the container 15 at the first reception position 12 is about twice the longitudinal dimension of the rack 22, for example, 240 mm is required. When these values are summed, the left-right width of the first conveyance path 9 is 540 mm, which corresponds to 4.5 times the longitudinal dimension of the rack 22. This is the minimum dimension required for the first conveyance path 9.

### (Storage Chamber Diameter)

The diameter of the storage chamber 10 is determined by the number of container cases 36 housed inside and the thickness of the heat insulator 35. The diameter of the storage chamber 10 is compared with the minimum dimension required for the first conveyance path 9, and when the diameter of the storage chamber 10 is larger, the left-right width of the container storage device 1 is determined based on the diameter of the storage chamber 10. On the other hand, when the minimum dimension required for the first conveyance path 9 is larger than the diameter of the storage chamber 10, the left-right width of the container storage device 1 is determined by the left-right width of the first conveyance path 9.

Therefore, when the minimum dimension required for the first conveyance path 9 is smaller than the diameter of the storage chamber 10 determined based on the number of the container cases 36, the left-right width of the container storage device 1 is determined based on the diameter of the storage chamber 10, that is, the number of the container cases 36, and therefore, the left-right width of the container storage device 1 becomes the minimum width that cannot be further reduced, and miniaturization, particularly reduction in width of the container storage device 1 can be achieved.

As an example, when the interval between the pair of second side surfaces 4a and 4b of the housing 2 is set to about 600 mm, which is about five times the longitudinal dimension of the rack 22, and the storage chamber 10 is disposed so as to be substantially in contact with the inside of the pair of second side surfaces 4a and 4b of the housing 2, the diameter of the storage chamber 10 is about 600 mm, which is five times the longitudinal dimension of the rack 22. Therefore, the first conveyance path 9 can be disposed, and as a result, a small container storage device 1 having a small left-right width can be implemented.

As described above, by disposing the empty rack buffer 26 between the main conveyance path 27 and the returning conveyance path 24 in the front-rear direction and disposing the empty rack buffer 26 between the rack transfer mechanism 29 and the first reception position 12 in the left-right direction, the empty rack buffer 26 can be disposed without enlarging the first conveyance path 9 in both the width direction and the front-rear direction. Therefore, the container storage device 1 that is small in both depth and left-right width can be implemented.

### (Arrangement of Storage Chamber)

Furthermore, it is preferable to dispose the storage chamber 10 close to the first conveyance path 9 and to dispose the third side surface 5, which is the front surface side of the housing 2, close to the front surface side of the storage chamber 10 because the dimension of the container storage device 1 can be minimized in the front-rear direction while satisfying necessary functions, and the container storage device 1 can be miniaturized.

### (Preferable Position of Second Reception Position: Radial Direction)

Next, a preferred arrangement of the second reception positions 13 provided in the storage chamber 10 will be described with reference to FIGS. 14 and 15. As described above, in the present embodiment, as an example, the container cases 36 each storing the container 15 are provided in the storage chamber 10 in a triple concentric circular shape, and a total of three second reception positions 13 are provided corresponding to the outer circumference circle 68a, the middle circumference circle 68b, and the inner circumference circle 68c, respectively. FIG. 14 illustrates a relation between the second reception position 13 for handling the containers 15 stored in the storage chamber 10 through the opening 66 on the upper surface of the storage chamber 10, the container transfer trajectory 19, and the size of the opening 66.

In FIG. 14, the container transfer trajectory 19a is on a straight line connecting the first reception position 12 and the storage chamber central axis 69, that is, on the radius of the storage chamber 10. Therefore, the distance between the two second reception positions 13 corresponding to intersections of the container transfer trajectory 19a with the outer circumference circle 68a and the inner circumference circle 68c is equal to a difference in radius between the outer circumference circle 68a and the inner circumference circle 68c, that is, a P1 dimension. The dimension of the opening 66a on the upper surface of the storage chamber 10 along the container transfer trajectory 19a may be obtained by adding the diameter of the container 15 to the P1 dimension and further adding a gap required for handling.

On the other hand, when the container transfer trajectory 19b is shifted by an angle θ from a radial direction of the storage chamber 10, the distance between the two second reception positions 13 corresponding to the intersections of the container transfer trajectory 19b with the outer circumference circle 68a and the inner circumference circle 68c is a P2 dimension, which is larger than the difference P1 between the radii of the outer circumference circle 68a and the inner circumference circle 68c. Therefore, the dimension of the opening 66b along the container transfer trajectory 19b also increases according to the P2 (> P1) dimension.

It is needless to say that the inside of the storage chamber 10 is cooled as described above, and it is desirable that the temperature change can be reduced even when the shutter 51 is opened and closed, and the dimension of the opening 66 needs to be minimized.

Therefore, in order to minimize the opening 66, it is most desirable to provide the second reception position 13 on a straight line connecting the first reception position 12 and the storage chamber central axis 69 and to dispose the container transfer trajectory 19 on the same straight line as the radius of the storage chamber 10.

According to the present embodiment, it is preferable to minimize the opening 66 because the amount of outside air entering the inside of the storage chamber 10 can be minimized even when the shutter 51 is opened, the temperature rise and condensation inside the storage chamber 10 can be prevented, and an environment suitable for storing the QC specimen can be obtained.

### (Minimum Error)

Next, a position error of the second reception position 13 will be described with reference to FIG. 15.

The second reception position 13 is positioned by rotating the disk 34 in the storage chamber 10, detecting an angle of the disk 34 with a detection element (not shown), and stopping the disk 34 such that the predetermined container 15 is at a predetermined angle position. Here, a minute error Δφ may occur in the stop angle of the disk 34.

Since the container transfer trajectory 19a is directed in the radial direction of the storage chamber 10 or the disk 34, a distance error in the radial direction hardly occurs even if a minute error Δφ occurs in the stop angle of the disk 34. Therefore, there is almost no error in the conveyance distance Q.

On the other hand, when a minute error Δφ occurs in the stop angular position of the disk 34 in the case where the disk 34 is disposed so as to be shifted by the angle θ from the radial direction of the storage chamber 10 as in the case of the container transfer trajectory 19b, an error δ occurs in the conveyance distance Q according to the angle θ, and the error becomes maximum in the container on the outer circumference circle 68a having the maximum diameter.

Therefore, providing the second reception position 13 on a straight line connecting the first reception position 12 and the storage chamber central axis 69 and disposing the container transfer trajectory 19 on the same straight line as the radius of the storage chamber 10 are optimal and most desirable for minimizing the influence of the stop angle error of the disk 34.

### (Minimum Conveyance Distance)

Here, assuming that the distance between the first reception position 12 and the second reception position 13 is the conveyance distance Q of the container 15, it is needless to say that minimizing the conveyance distance Q shortens the handling time of the container 15 and is suitable for speeding up.

The conveyance distance Q is minimized when the container transfer trajectory 19 is on a straight line passing through the central axis of the storage chamber 10. Therefore, it is most desirable to provide the second reception position 13 on the straight line connecting the first reception position 12 and the storage chamber central axis 69 and to dispose the container transfer trajectory 19 on the same straight line as the radius of the storage chamber 10 in order to increase the processing speed.

As described above, by providing the second reception position 13 on the straight line connecting the first reception position 12 and the storage chamber central axis 69, the opening 66 can be minimized, the influence of the stop angle position error of the disk 34 can be minimized, and the processing speed can be increased.

However, although it is most preferable to provide the second reception position 13 on the straight line connecting the first reception position 12 and the storage chamber central axis 69, the position of the second reception position 13 is not strictly determined, and the same effect can be obtained even if a straight line connecting the first reception position 12 and the second reception position 13 is shifted from the straight line connecting the first reception position 12 and the storage chamber central axis 69 within an allowable error range of, for example, about several millimeters.

### (Inclined Arrangement of Second Conveyance Path)

As described above, it is preferable that the first reception position 12 provided in the first conveyance path 9 is provided on the transfer line 28 at a position shifted leftward from the second side surface 4b of the housing 2 by substantially the longitudinal dimension LR of the rack 22.

Further, it is preferable that the diameter of the storage chamber 10 is about five times the longitudinal dimension LR of the rack 22, and the storage chamber 10 is disposed so as to be substantially in contact with the inside of the pair of second side surfaces 4a and 4b of the housing 2. That is, the storage chamber central axis 69 is provided at a distance of approximately 2.5 times the longitudinal dimension LR of the rack 22 from the second side surfaces 4a and 4b.

On the other hand, since the second reception position 13 provided in the storage chamber 10 is preferably provided on the straight line connecting the first reception position 12 and the storage chamber central axis 69, the container transfer trajectory 19, which is a straight line connecting the first reception position 12 and the second reception position 13, is inclined relative to the first conveyance path 9. That is, it is preferable that the second conveyance path 11 provided parallel to the container transfer trajectory 19 is inclined relative to the first conveyance path 9 or the second side surface 4b.

As a preferable direction of the inclination, the first reception position 12 is on the downstream side of the transfer line 28 or on the side close to the second side surface 4b relative to a perpendicular line drawn from the second reception position 13 to the first conveyance path 9 or the transfer line 28, and is close to the second conveyance path support column 17 and on the side opposite to the STAT port 32.

### (Upper Cover and Monitor)

As illustrated in FIGS. 4 to 7, a safety cover 72 having a substantially rectangular parallelepiped shape with each surface formed of, for example, a transparent resin plate is provided on the upper surface of the storage chamber 10, so that the operator does not accidentally touch the container storage device 1 during driving when the container storage device 1 is energized. A monitor 75 of, for example, a touch monitor type, which displays an operation state of the container storage device 1 or the analyzer connected to the container storage device 1 and allows the operator to instruct the operation, may be provided on the front surface side of the safety cover 72.

An opening and closing door 74 rotatable around a supporting shaft 73 is provided on a left side surface of the safety cover 72, and an operator can access the second conveyance path 11 by opening the opening and closing door 74. Therefore, the safety cover 72 has a configuration by which maintenance work such as cleaning the lower end portion of the container gripping claw 65 of the container gripping mechanism 48 can be performed. A lock mechanism using an actuator such as a solenoid (not shown) may be provided so that the opening and closing door 74 does not open while the container storage device 1 is energized.

### (Operation Sequence)

An example of the operation of the container storage device 1 according to the present embodiment will be described with reference to FIGS. 16 to 32.

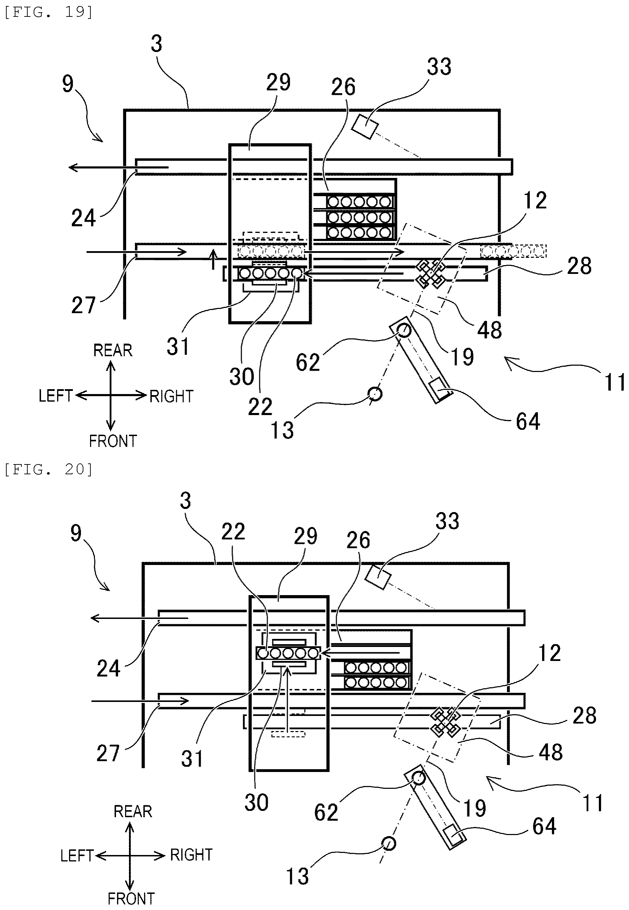

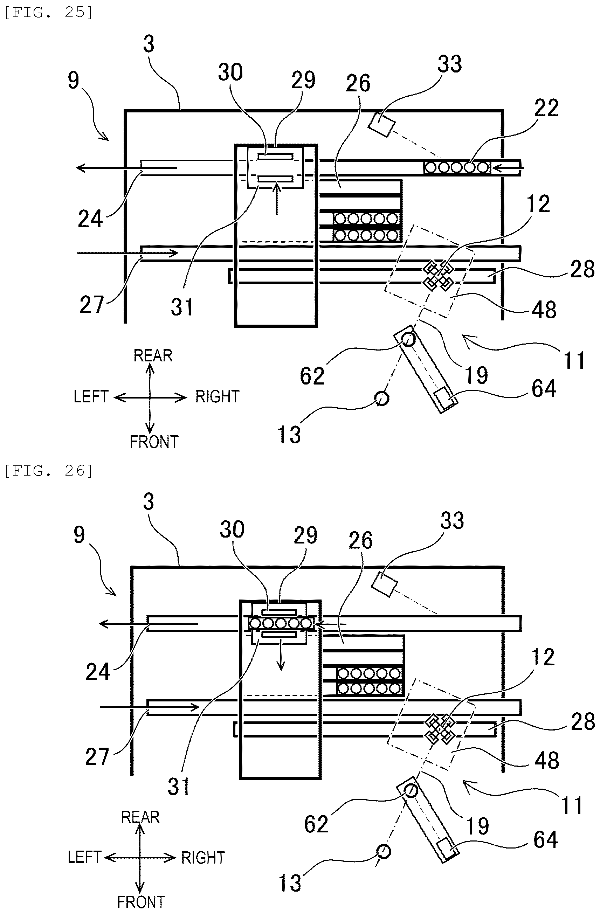

FIGS. 16 to 19 illustrate an operation of placing the container 15 in the storage chamber 10 on the rack 22 that waits on the transfer line 28 and delivering the container 15 to the main conveyance path 27. FIGS. 20 to 24 illustrate an operation of transferring the empty rack 22 from the empty rack buffer 26 onto the transfer line 28, placing the container 15 in the storage chamber 10 on the rack 22, and delivering the container 15 to the main conveyance path 27. FIGS. 25 to 32 illustrate an operation of completing the analysis in the analysis unit, collecting the container 15 placed on the rack 22 returned from the returning conveyance path 24 in the storage chamber 10, and moving the rack 22 to the empty rack buffer 26.

In FIGS. 16 to 24, the operation of the second conveyance path 11 and the operation of storing or taking out the container 15 in or from the storage chamber 10 are the same as the operation described with reference to FIGS. 9 to 12, and thus details thereof will be omitted.

### (Delivery)

### (Initial State)

FIG. 16 is a diagram illustrating an initial state of the first conveyance path 9 at the start of operation of the container storage device 1 according to the present embodiment.

In the initial state shown in FIG. 16, the container gripping mechanism 48 is at the first reception position 12 on the transfer line 28. Here, as the position of the container gripping mechanism 48, the central axis position of the container 15 gripped by the container gripping claws 65 will be described as a representative position.

The hand opening and closing mechanism 31 of the rack transfer mechanism 29 is on the transfer line 28, and an empty rack 22 is disposed between the rack transfer mechanism 29 of the transfer line 28 and the first reception position 12. Although there is a space for storing four racks 22 in the empty rack buffer 26, only three racks 22 are stored while one place close to the returning conveyance path 24 is an empty space. This is because it is possible to cope with a case where the rack 22 to be collected from the returning conveyance path 24 returns first due to a reason such as staying in the analysis unit before the empty rack is delivered from the first conveyance path 9.

### (Transfer from Container storage chamber)

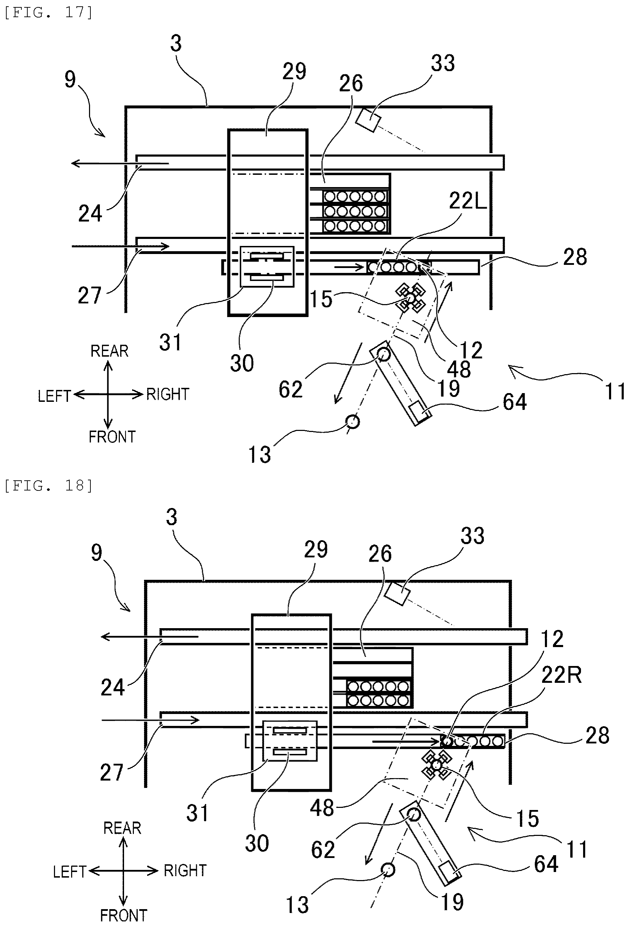

In FIG. 17, the empty rack 22 placed on the transfer line 28 is conveyed to the first reception position 12, and the insertion holes 23 provided in the rack 22 are aligned with the first reception position 12. In the present embodiment, five insertion holes 23 are provided in a row in the rack 22, and therefore, as an example, the rack 22 is first aligned with the first position 22L, that is, the rightmost insertion hole 23 is aligned with the first reception position 12.

Further, when placing or taking out the container 15 inside or from the storage chamber 10 is performed at the second reception position 13, as shown in FIGS. 10 to 12, the shutter opening and closing mechanism 50 is operated each time to open the shutter 51, and when placing or taking out the container 15 is completed, the shutter opening and closing mechanism 50 is operated in a reverse direction to close the shutter 51.

Alternatively, when a plurality of containers 15 are placed or taken out in a short time or continuously, the shutter 51 may be opened and closed every time a series of a plurality of operations is performed without opening and closing the shutter 51 each time.

### (Checking of Container Barcode)

The container gripping mechanism 48 is moved to the second reception position 13 along the second conveyance path 11 in a state in which the shutter 51 is opened and the container gripping mechanism 48 is raised to the upper end position. The container gripping mechanism 48 is lowered to the lower end position, and the container gripping claw 65 is operated to grip the container 15 at the second reception position 13. The container gripping mechanism 48 is raised to the upper end position, and the container 15 is conveyed along the second conveyance path 11 from the second reception position 13 to the third reception position 62. At the third reception position 62, the container gripping mechanism 48 is lowered to the lower end position, the container gripping claw 65 is operated to open the container 15, the barcode 21 attached to the container 15 is read by the barcode reader 64 and sent to the control device 14, and the type of the QC specimen in the container 15 is checked. When the type of the QC specimen is correct, the container gripping claw 65 is operated again to grip the container 15, and the container gripping mechanism 48 is raised to the upper end. The container gripping mechanism 48 is lowered to the lower end position while conveying the container 15 from the third reception position 62 to the first reception position 12 along the second conveyance path 11. The container gripping claw 65 is opened, and the container 15 is placed in the insertion hole 23 of the rack 22 at the first position 22L.

Here, at the third reception position 62, the barcode 21 may be read while rotating the specimen container 15 around a vertical axis by a container rotating mechanism (not shown).

### (Movement of Rack by One Pitch Each Time)

The container gripping mechanism 48 is raised to the upper end position, the rack 22 is moved rightward by one pitch of the insertion hole 23, and an insertion opening adjacent to the left of the insertion hole 23 into which the container 15 has been inserted first is aligned with the first reception position 12.

The container gripping mechanism 48 is moved again from the first reception position 12 to the second reception position 13 to grip a predetermined container 15, the barcode 21 is read at the third reception position 62 to check the type of the QC specimen, and the container 15 is inserted into the insertion hole 23 of the rack 22 at the first reception position 12. The rack 22 is moved rightward by one pitch of the insertion hole 23 again. By repeating the above operation by the number of insertion holes 23 provided in the rack 22, the containers 15 are respectively inserted into all the insertion holes 23 in the rack 22, and the rack 22 is at the second position 22R shown in FIG. 18.

### (Rack Delivery)

The rack 22 into which the containers 15 are inserted is moved leftward by the transfer line 28 as indicated by an arrow in FIG. 19, and is moved to a position of the rack transfer mechanism 29. Next, the hand 30 is closed by the action of the hand opening and closing mechanism 31, and the hand 30 grips the rack. The hand opening and closing mechanism 31 moves rearward while holding the rack 22, and moves the rack 22 to the main conveyance path 27. The hand opening and closing mechanism 31 operates to open the hand 30, thereby releasing the rack 22. The rack 22 is placed on the main conveyance path 27, and therefore, the rack 22 is conveyed by the main conveyance path 27 to, for example, an analyzer connected adjacent to the container storage chamber 10.

### (Case of Five or Less Containers)

It is not required to respectively insert the containers 15 placed on the rack 22 into all the insertion holes 23 provided in the rack 22, and in some cases, for example, only one container 15 is also placed.

In such a case, as illustrated in FIG. 17, when the first container 15 is to be placed, the rack 22 is disposed at the first position 22L, and the first reception position 12 is the insertion hole 23 at a right end of the rack 22. Therefore, the rack 22 does not need to move further rightward than the first position 22L. In this case, the state shown in FIG. 18 is omitted, and when one container 15 is inserted, the rack 22 is moved from the first position 22L to the rack transfer mechanism 29 by the transfer line 28 as shown in FIG. 19, and the subsequent processing can be performed.

That is, when the first container 15 is first to be placed on the rack 22, the insertion hole 23 at the right end of the rack 22 is the first reception position 12. When two or more containers 15 are to be placed, the rack 22 is moved rightward by one pitch of the insertion hole 23, and when the placement of the required number of containers 15 is completed, the rack 22 is moved leftward by the transfer line 28 from that position and moved to the rack transfer mechanism 29.

In this case, the movement amount of the rack 22 from the completion of the placement of the container 15 on the rack 22 to the rack transfer mechanism 29 decreases as the number of containers 15 decreases, and therefore, the operation time can be shortened, and the throughput can be increased.

### (Supply of Rack from Empty Rack Buffer)

Next, a configuration in which the empty rack 22 is supplied from the empty rack buffer 26 and the container 15 is placed on the rack 22 from the storage chamber 10 will be described with reference to FIGS. 20 to 24.

In FIG. 20, the empty rack 22 is moved from the empty rack buffer 26 to the rack transfer mechanism 29 in a leftward arrow direction by a rack moving mechanism (not shown). The hand opening and closing mechanism 31 is moved in advance to the position of the rack 22 taken out from the empty rack buffer 26, and stands by with the hand 30 opened. The hand 30 is closed to grip the rack 22.

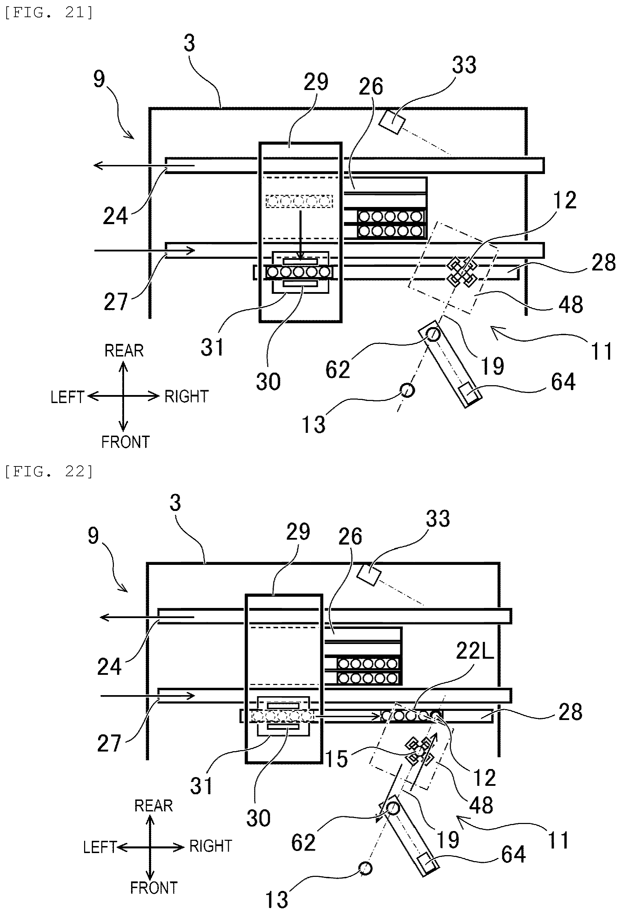

Next, as illustrated in FIG. 21, the rack transfer mechanism 29 is operated to move the hand opening and closing mechanism 31 to the position of the transfer line 28, and then the hand 30 is opened to place the rack 22 on the transfer line 28.

Next, as illustrated in FIG. 22, the rack 22 on the transfer line 28 is moved to the first reception position 12. The state shown in FIG. 22 is the same as the state shown in FIG. 17 except that the number of racks 22 placed in the empty rack buffer 26 is different.

Hereinafter, in FIGS. 22 to 24, similarly to FIGS. 17 to 19, the container 15 is taken out from the second reception position 13, the barcode 21 is checked at the third reception position 62, and the container 15 is moved to the first reception position 12 and placed on the rack 22. Thereafter, the rack 22 on which the container 15 is placed is sent to an analysis unit connected to the downstream side of the container storage device 1 by the main conveyance path 27.

FIGS. 17 and 18 and FIGS. 22 and 23 illustrate an example in which five containers 15 are placed in the rack 22, but it is not required to place the containers 15 in all the insertion holes 23 provided in the rack 22, and it is sufficient to place a necessary number of containers 15.

Further, it is preferable that the rack 22 supplied from the empty rack buffer 26 is preferentially supplied from a side farthest from the main conveyance path 27.

This is because, that is, when the hand 30 accesses the empty rack buffer 26 closest to the main conveyance path 27, it is preferable to stop the main conveyance path 27 in order to reliably avoid interference between the hand 30 and the rack 22 on the main conveyance path 27, and the processing efficiency decreases. That is, in order to increase the processing efficiency, it is desirable to preferentially use the rack 22 farthest from the main conveyance path 27 so as to reduce the use frequency of the empty rack buffer 26 closest to the main conveyance path 27.

### (Collection)

FIGS. 25 to 32 are diagrams illustrating operations of returning the rack 22, which is returned from the adjacently disposed analysis unit by the returning conveyance path 24, and the QC specimen container 15 placed on the rack 22 to the inside of the storage chamber 10 again.

In FIG. 25, it is determined whether the rack 22 conveyed from the downstream side to the upstream side on the returning conveyance path 24 is a rack 22 on which the QC specimen container 15 to be collected in the storage chamber 10 is placed or a rack 22 that passes through the container storage device 1 and is conveyed to a conveyance path connected further upstream or another processing device, by reading a barcode (not shown) attached to the rack 22 by the barcode reader 33 and sending the barcode to the control device 14.

If the control device 14 determines that the rack 22 is a rack 22 on which the QC specimen container 15 to be collected in the storage chamber 10 is placed, the rack transfer mechanism 29 moves the hand opening and closing mechanism 31 onto the returning conveyance path 24 and opens the hand 30.

As illustrated in FIG. 26, the rack 22 is conveyed to the rack transfer mechanism 29, the hand 30 is closed by the action of the hand opening and closing mechanism 31, and the rack 22 is gripped by the hand 30. The rack transfer mechanism 29 moves the hand opening and closing mechanism 31 forward.

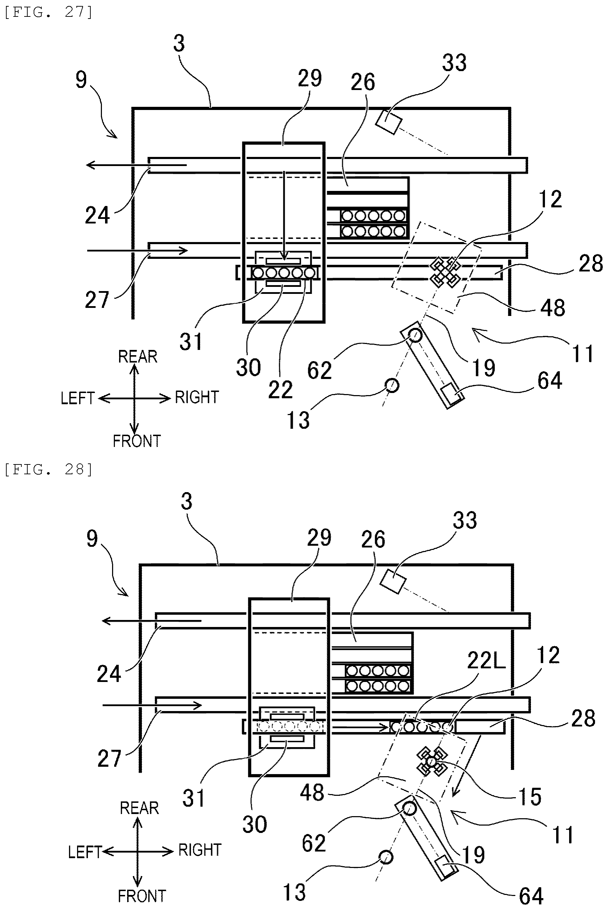

As illustrated in FIG. 27, the hand opening and closing mechanism 31 moves the rack 22 to the transfer line 28. As illustrated in FIG. 28, the hand 30 is opened by the action of the hand opening and closing mechanism 31, the rack 22 is placed on the transfer line 28 and is conveyed on the transfer line 28, and the QC specimen container 15 is aligned with the first reception position 12 at the first position 22L.

The container gripping mechanism 48 is lowered to the lower end position at the first reception position 12, and the container gripping claw 65 is closed to grip the QC specimen container 15. The container gripping mechanism 48 is raised to the upper end position to convey the QC specimen container 15 to the third reception position 62 along the container transfer trajectory 19, the container gripping mechanism 48 is lowered to the lower end position to open the container gripping claw 65 to open the QC specimen container 15, and the barcode 21 attached to the QC specimen container 15 is read by the barcode reader 64.

According to the result of the read barcode 21, it is possible to specify in which container case 36 in the storage chamber 10 the QC specimen container 15 was stored before being taken out from the storage chamber 10. Therefore, the disk 34 is rotated and positioned so that the originally stored container case 36 is at the second reception position 13, and the QC specimen container 15 at the third reception position 62 is gripped again by the container gripping mechanism 48 and raised to the upper end position.

The shutter 51 is opened by the action of the shutter opening and closing mechanism 50 to open the opening and closing lid 53 of a predetermined container case 36 by the action of the lid opening and closing mechanism 54, and the container gripping mechanism 48 is lowered to the lower end position with the container case 36 as the second reception position 13 to store the container 15 in the container case 36. After opening the container gripping claws 65, the container gripping mechanism 48 is raised to the upper end position and moved to the first reception position 12 along the container transfer trajectory 19.

The storage chamber 10 returns to the sealed state by closing the opening and closing lid 53 of the container case 36 by the action of the lid opening and closing mechanism 54 and closing the shutter 51 by the action of the shutter opening and closing mechanism 50.

Although the operation of returning the container 15 to the container case 36 where the container 15 is stored before being taken out from the storage chamber 10 is shown here, the operation is not limited thereto, and for example, an empty container case 36 may be disposed in the storage chamber 10, and the collected container 15 may be returned thereto.

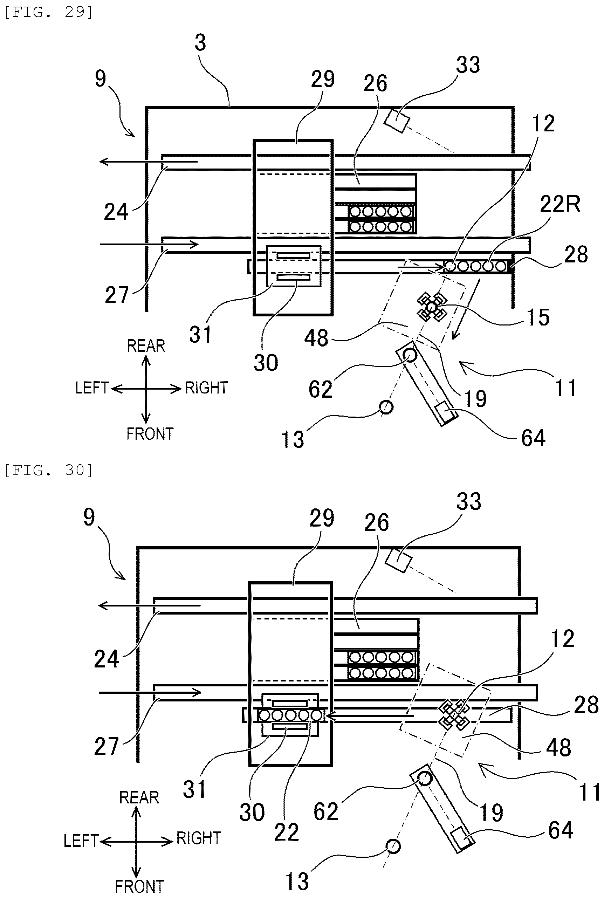

FIG. 29 illustrates a state in which the rack 22 moves from the first position 22L in FIG. 28 by one pitch and finally reaches the second position 22R, and the operation of transferring and storing the QC specimen container 15 from the first reception position 12 to the second reception position 13 is repeated by the number of containers placed on the rack 22. With this operation, all the QC specimen containers 15 placed on the rack 22 can be stored in the storage chamber 10.

As described above, all the QC specimen containers 15 can also be stored in the container case 36 where they are stored before each of them is taken out, and therefore, for example, even when components from the QC specimen originally stored adhere to the inside of the container case 36, the components are the components from the same QC specimen. Therefore, it is possible to provide a highly reliable container storage device 1 capable of preventing mixing of another sample component stored in the same container case 36 last time, and maintaining the accuracy of the standard sample and the quality control sample at a higher level.

After all the containers 15 placed on the rack 22 are transferred to the storage chamber 10, as shown in FIG. 30, the hand opening and closing mechanism 31 is operated to open the hand 30, the empty rack 22 is moved to the rack transfer mechanism 29 on the transfer line 28, and the hand opening and closing mechanism 31 is operated to close the hand 30 to grip the rack 22.

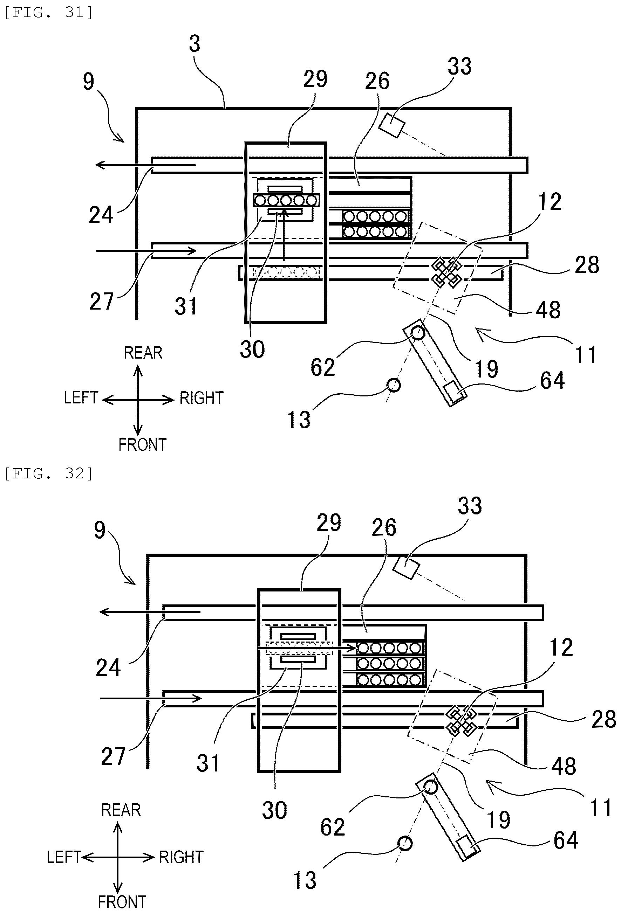

As illustrated in FIG. 31, the hand opening and closing mechanism 31 gripping the rack 22 is moved rearward by operating the rack transfer mechanism 29, and the empty slot 25 in the empty rack buffer 26 is moved to, for example, the third slot 25 from the front as an example.

As illustrated in FIG. 32, the hand opening and closing mechanism 31 is operated to open the hand 30 to release the gripping of the rack 22, the rack 22 is transferred from the rack transfer mechanism 29 to the empty rack buffer 26 by the rack moving mechanism (not shown), and a series of collection operations of the container 15 is completed.

As described above, the container 15 containing the QC specimen, which is stored in the sealed container case 36 provided with the opening and closing lid 53 in the storage chamber 10, can be placed on the rack 22 via the container gripping mechanism 48 provided in the second conveyance path 11, delivered to the main conveyance path 27 provided in the first conveyance path 9, and supplied to the analysis unit connected to the downstream side of the container storage device 1.

Furthermore, after the analysis in the analysis unit is completed, the container 15 containing the QC specimen can be taken out from the rack 22 returned to the container storage device 1 via the returning conveyance path 24 provided in the first conveyance path 9, transferred to the inside of the sealed container case 36 including the opening and closing lid 53 and provided in the storage chamber 10 via the container gripping mechanism 48 provided in the second conveyance path 11, and stored.

### (Increase in Speed by Individual Drive)

Here, in the present embodiment, since the shutter opening and closing mechanism 50, the lid opening and closing mechanism 54, and the container gripping mechanism 48 include independent motors, respectively, the opening and closing operation of the shutter 51, the opening and closing operation of the opening and closing lid 53, and the gripping or releasing operation of the container 15 can be continuously performed at minimum time intervals. Therefore, a series of container 15 handling operations can be performed in a short time, and a speed in throughput can be increased. This effect is obvious in consideration of the fact that, in a configuration in which the opening and closing operation of the shutter 51, the opening and closing operation of the opening and closing lid 53, and the gripping or releasing operation of the container 15 are performed by a single drive mechanism or a single handling mechanism as another embodiment, extra time is required for the handling mechanism to move between the respective arrangement locations.

### (Use of Exhaust Heat)

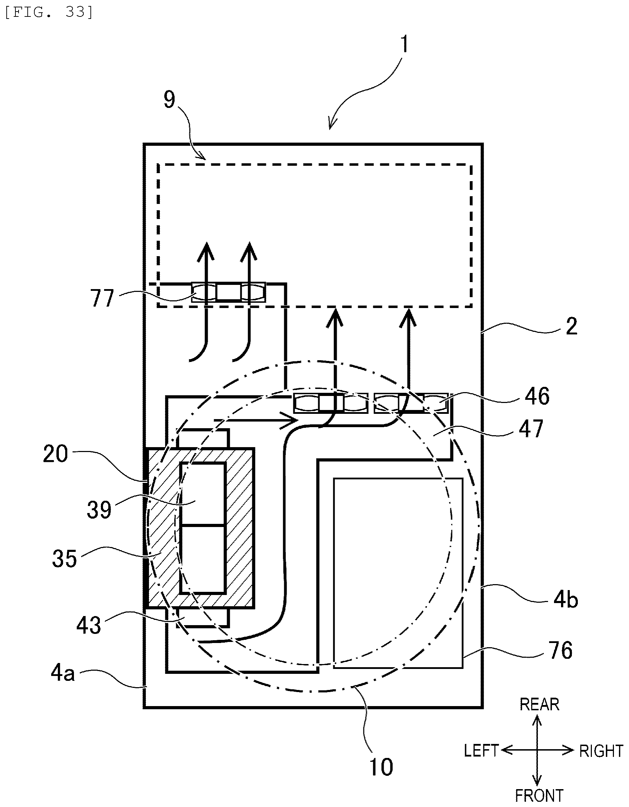

A configuration for reducing condensation on the surface of the container 15 by exhaust heat will be described with reference to FIGS. 33, 2, 5, and 7.

As described above, the exhaust fan 46 is provided in the back-surface recessed portion 8 provided in the rear surface of the housing 2, and exhaust heat from a high-temperature side of the cooling element 41 is exhausted to the back-surface recessed portion 8 of the housing 2 by the heat-dissipation fan 44. Further, air inside the housing 2, which has a high temperature due to heat generated from a cooling drive circuit 76, a drive circuit of each motor, and the like provided inside the housing 2, is also discharged to the back-surface recessed portion 8 of the housing 2 by a housing heat-dissipation fan 77.

As is clear from FIGS. 7 and 33, the back-surface recessed portion 8 is located below the first conveyance path 9.

Therefore, the high-temperature exhaust gas exhausted to the back-surface recessed portion 8 heats the first conveyance path 9 from the lower surface, and the air around the first conveyance path 9 or inside the first conveyance path 9 can be made, by the upward convection, slightly higher than the environmental temperature in the room where the container storage device 1 is placed. An absolute humidity when the maximum temperature and humidity at the environmental temperature is, for example, 35°C and 80% relative humidity is about 31.7 g/m³, which is equal to an absolute humidity when the temperature is 40°C and the relative humidity is 62%. That is, when the ambient temperature is increased, the air becomes dry air having a reduced relative humidity, so that the moisture is easily evaporated and hardly condensed.

The container 15 containing the QC specimen is stored in the cooled storage chamber 10, and therefore, the temperature thereof is, for example, about 10°C. When the container 15 is taken out from the storage chamber 10, the container 15 is exposed to the environmental temperature, so that the air in the vicinity of the surface of the container 15 is cooled to a temperature equal to or lower than a dew point, and the surface of the container 15 may be condensed. On the other hand, the container 15 is conveyed by the second conveyance path 11 while being gripped by the container gripping mechanism 48, placed on the rack 22 at the first reception position 12 provided in the first conveyance path 9, and then conveyed by the main conveyance path 27. The first conveyance path 9 is a low-humidity dry region due to exhaust heat, and therefore, there is an effect that an increase in condensation can be prevented.

When the analysis in the analysis unit adjacent to the container storage device 1 is completed and the rack 22 on which the QC specimen container 15 is placed returns via the returning conveyance path 24, the rack 22 moves from the returning conveyance path 24 to the first reception position 12 via the dry region in the first conveyance path 9 even if condensation occurs on the surface of the container 15. Therefore, there is an effect that the condensation water on the surface of the container 15 can be evaporated and reduced during that time.

### <Second Embodiment>

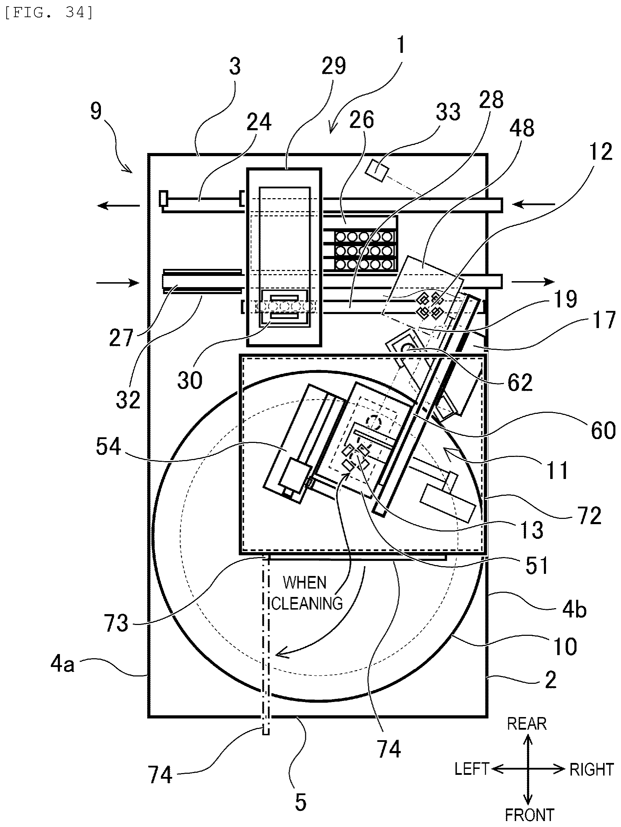

A second embodiment of the invention will be described in detail with reference to FIG. 34.

In the present embodiment, differences from the first embodiment will be mainly described. In the drawings used in the present embodiment, the same members as those in the first embodiment are denoted by the same reference numerals, and descriptions thereof will be omitted as appropriate.

The present embodiment shown in FIG. 34 is different from the first embodiment shown in FIG. 4 in that the monitor 75 is not provided on the front surface, and the opening and closing door 74 rotatable around the supporting shaft 73 provided on the safety cover 72 is provided not on a side surface of the safety cover 72 but on a front surface, and the lid opening and closing mechanism 54 for opening and closing the opening and closing lid 53 of the container case 36 is not provided on the side of the shutter 51 opposite to the first conveyance path 9 along the container transfer trajectory 19, but is provided on the side opposite to the second conveyance path 11 along the long side of the shutter 51 parallel to the container transfer trajectory 19.

Other configurations are the same as those of the first embodiment.

In the present embodiment having the configuration described above, the same effect as that in the first embodiment can also be obtained.

Further, according to the present embodiment, the operator can access the inside by opening the opening and closing door 74 from the front surface side when performing maintenance work, and therefore, there is an effect that maintenance is facilitated.

### <Third Embodiment>

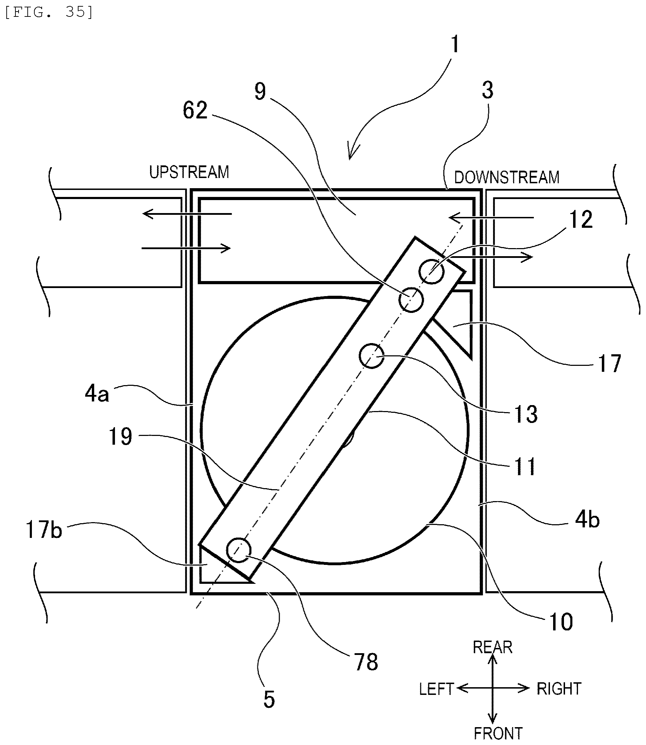

A third embodiment of the invention will be described in detail with reference to FIG. 35.

In the present embodiment, differences from the first embodiment will be mainly described. In the drawings used in the present embodiment, the same members as those in the first embodiment are denoted by the same reference numerals, and descriptions thereof will be omitted as appropriate.

The present embodiment shown in FIG. 35 is different from the first embodiment shown in FIG. 1 in that the second conveyance path 11 extends across the cylindrical storage chamber 10 to a second conveyance path support column 17b provided in a region surrounded by the third side surface 5 that is the front surface, the second side surface 4a on the left side, and the storage chamber 10, and includes, on the front surface side of the storage chamber 10, a fourth reception position 78 where the container 15 can be placed.

Other configurations are the same as those of the first embodiment.

In the present embodiment having the configuration described above, the same effect as that in the first embodiment can also be obtained.

The second conveyance path 11 is supported by the second conveyance path support column 17 and the second conveyance path support column 17b with the storage chamber 10 interposed therebetween in a so-called double-supported structure, and therefore, a strong configuration can be obtained. Further, the fourth reception position 78 is provided in the vicinity of the third side surface 5 that is the front surface, and therefore, for example, the container 15 which needs to be taken out of the container storage device 1 can be placed at the fourth reception position 78 and taken out by the operator.

Alternatively, the operator can place a new container 15 at the fourth reception position 78, and additionally load the container 15 into the storage chamber 1 via the second reception position 13 by the action of the second conveyance path 11, or place the container 15 on the rack 22 on the transfer line 28 via the first reception position 12.

### <Fourth Embodiment>

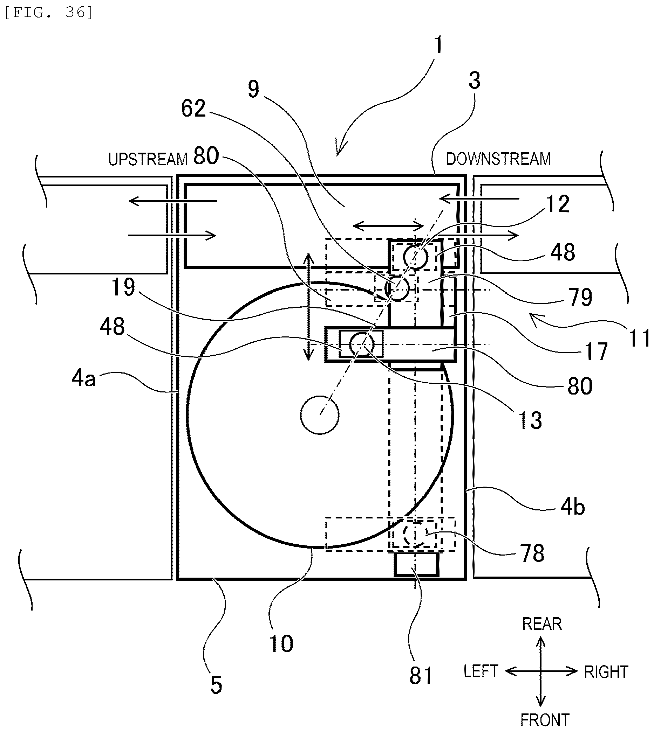

A fourth embodiment of the invention will be described in detail with reference to FIG. 36.

In the present embodiment, differences from the first to third embodiments will be mainly described. In the drawings used in the present embodiment, the same members as those in the first to third embodiments are denoted by the same reference numerals, and descriptions thereof will be omitted as appropriate.

The present embodiment shown in FIG. 36 is different from the first to third embodiments in that the second conveyance path 11 includes, instead of the conveyance rail 60 parallel to the container transfer trajectory 19, a front and rear rails 79 fixed in the front-rear direction, a left and right rails 80 perpendicular to the front and rear rails 79 and driven by a motor (not shown) along the front and rear rails 79 to be movable in the front-rear direction, and the container gripping mechanism 48 driven by a motor (not shown) along the left and right rails 80 and supported to be movable in the left-right direction.

Other configurations are the same as those of the first to third embodiments.

In the present embodiment having the configuration described above, the same effect as that in the first to third embodiments can also be obtained.

The container gripping mechanism 48 can be moved along the container transfer trajectory 19 connecting the first reception position 12 and the second reception position 13 by appropriately controlling the amount of movement of the front and rear rails 79 and the left and right rails 80.

Alternatively, even when the third reception position 62 is not on the straight line connecting the first reception position 12 and the second reception position 13, the container gripping mechanism 48 may be controlled to move along a curved line or a bent line connecting the first reception position 12, the third reception position 62, and the second reception position 13, and there is an effect that the degree of freedom of placement of the third reception position 62 is increased.

Further, the front and rear rails 79 can be supported with high rigidity by extending the front and rear rails 79 to the vicinity of the third side surface 5, which is the front surface of the housing 2, and supporting the front and rear rails 79 by a second front and rear rail supporting column 81, and the container 15 that needs to be taken out of the container storage device 1 can be placed at the fourth reception position 78 and taken out by the operator by providing a fourth reception position 78, on which the container 15 can be placed, in the vicinity of the second front and rear rail supporting column 81.

Alternatively, the operator can place a new container 15 at the fourth reception position 78, and additionally load the container 15 into the storage chamber 1 via the second reception position 13 by the action of the second conveyance path 11, or place the container 15 on the rack 22 on the transfer line 28 via the first reception position 12.

### <Fifth Embodiment>

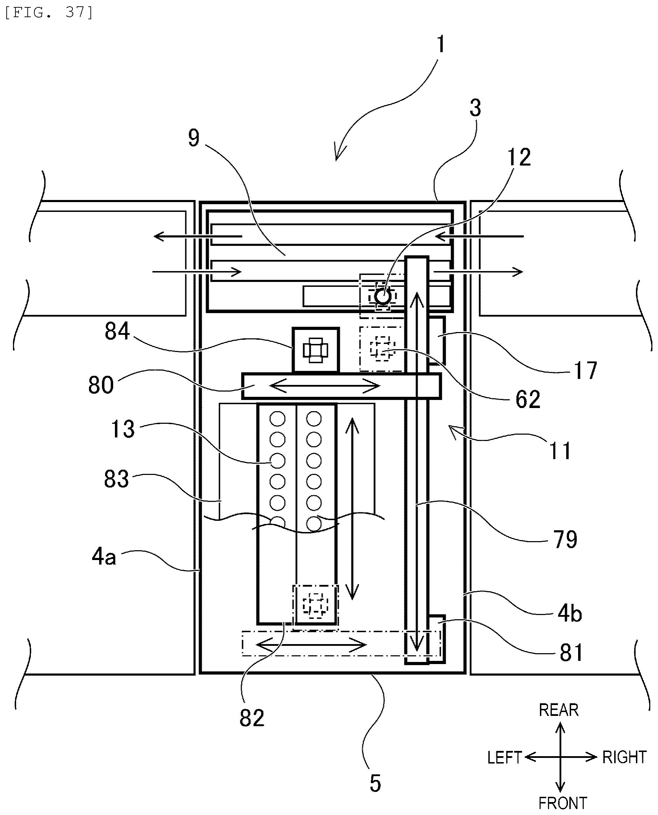

A fifth embodiment of the invention will be described in detail with reference to FIG. 37.

In the present embodiment, differences from the fourth embodiment will be mainly described. In the drawings used in the present embodiment, the same members as those in the fourth embodiment are denoted by the same reference numerals, and descriptions thereof will be omitted as appropriate.

The present embodiment shown in FIG. 37 is different from the fourth embodiment in that a storage chamber 82 is not cylindrical but has a rectangular shape that is longer in the front-rear direction than in the left-right direction and includes a storage chamber lid 83 that opens and closes the entire upper surface. In the present embodiment, the container cases 36 are arranged side by side in two columns in the storage chamber 82.

Other configurations are the same as those of the fourth embodiment.

In the present embodiment having the configuration described above, the same effect as that in the fourth embodiment can also be obtained.

In addition, the container case 36 is at a fixed position in the rectangular storage chamber 82 and cannot rotate-unlike the case where the container cases 36 are stored in the cylindrical storage chamber 10, and therefore, the container cases 36 cannot be moved to the second reception position 13. Therefore, by making the container gripping mechanism 84, which can freely move forward, backward, leftward, and rightward by the front and rear rails 79 and the left and right rails 80, movable over the entire range of the two columns in which the container cases 36 are arranged, the QC specimen container 15 can be taken out from the container case 36 at any position and transferred to the first reception position 12. Conversely, the QC specimen container can be transferred from the first reception position 12 to any container case 36 in the storage chamber 82. Here, by disposing the rectangular storage chamber 82 longer in the front-rear direction than in the left-right direction, the lateral width of the container storage device 1 can be reduced. Therefore, the width of the container storage device 1 can be reduced, and the miniaturization thereof can be achieved, so that this arrangement is preferable.

In the fourth embodiment and the fifth embodiment, the second conveyance path 11 requires two motors, a motor for a movement in the front-rear direction, a motor for a movement in the left-right direction, as drive sources. On the other hand, as shown in the first embodiment to the third embodiment, when the second conveyance path 11 is implemented by the conveyance rail 60 parallel to the container transfer trajectory 19, the drive source may be only one motor, and can be implemented with a simpler configuration. Therefore, this arrangement is preferable.

### <Sixth Embodiment>

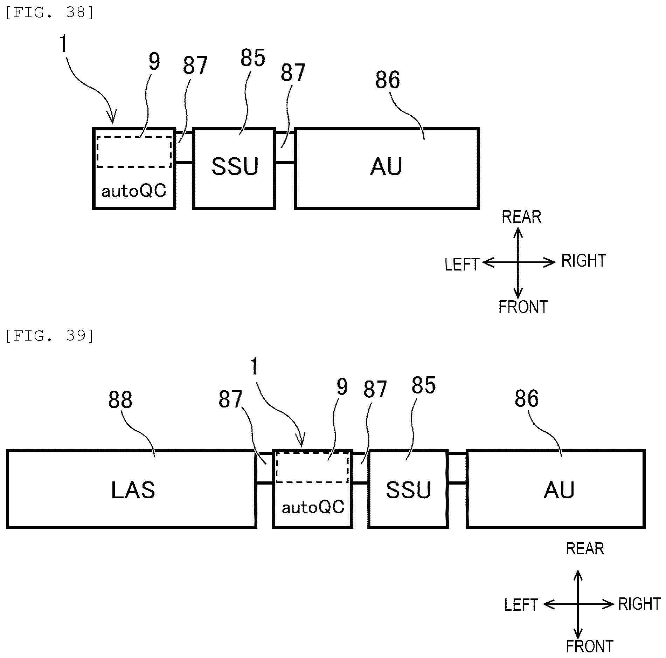

A sixth embodiment of the invention will be described in detail with reference to FIGS. 38 to 41.

The present embodiment illustrates a configuration of an analysis system including a container storage device according to the present embodiment.

A configuration of the analysis system including the container storage device 1 according to the present embodiment will be described with reference to FIGS. 38 to 41. In FIGS. 38 to 41, when the left side is an upstream side and the right side is a downstream side, the reagent and the specimen samples are conveyed from the left to the right in the entire system, and the analysis processing proceeds. The container storage device 1 may be referred to as an AutoQC module or simply an AutoQC.

FIG. 38 illustrates an example of the analysis system including the container storage device 1, in which a sample supply module (SSU: Sample Supply Unit) 85 for an operator to supply or take out a sample to be analyzed is connected to the downstream side of the container storage device 1, and an analysis module (AU: Analytical Unit) 86 for performing various analyses is further connected to the downstream side. Adjacent modules are connected by a connection conveyance path 87. The connection conveyance path 87 may not be independent and may be integrated with any module.

The operator adds a sample or the like from the SSU 85, and the added sample or the like is conveyed to the AU 86 via the connection conveyance path 87 and analyzed. The sample for which the analysis has been completed is discarded in the AU or returned to the SSU 85 and taken out by the operator.

As described above, in the analysis system, it is necessary to perform quality control using the standard sample and the quality control sample during startup every morning or when a reagent is additionally added. Therefore, in a system in which quality control is manually performed, the operator in charge has to complete the work before starting work, which is a burden. Therefore, for example, when an autoQC 1 according to the invention is added to an existing system constructed only by the SSU 85 and the AU 86 and is connected to the existing system as shown in FIG. 38 via the connection conveyance path 87, quality control can be automatically performed. For example, the quality control is automatically performed by setting the start time of the quality control to, for example, one hour before the start of work, and the quality control can be completed before the start time. The operator may start the work at the start time, which is effective in improving a working environment.

In the invention, the autoQC 1 is configured as an independent module and can be additionally placed in the existing automatic analysis system via the connection conveyance path 87, and therefore, there is no need to update the entire automatic analysis system, and there is an effect that a flexible system configuration with a high degree of freedom according to user needs is possible.

### <Seventh Embodiment>

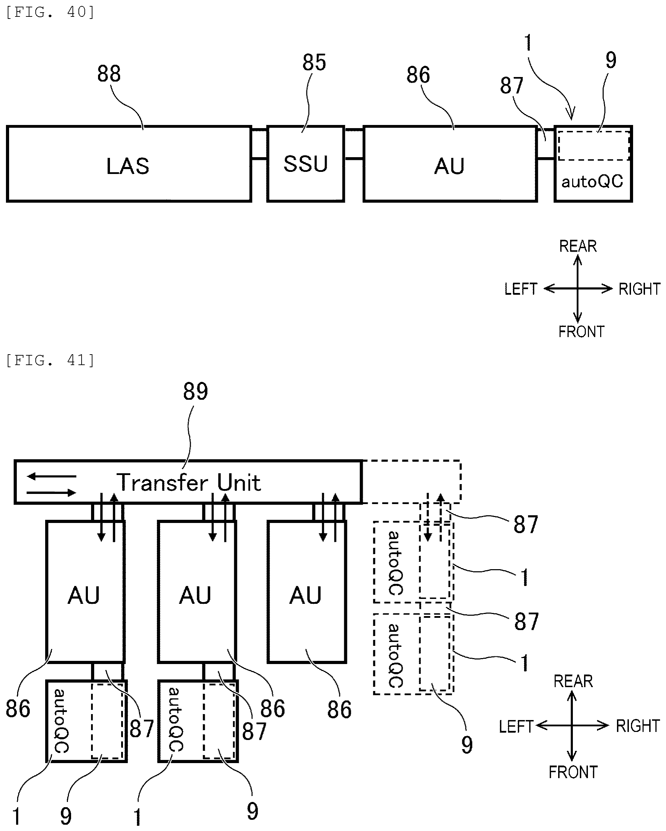

A seventh embodiment of the invention will be described with reference to FIGS. 39 and 40.

The present embodiment illustrates a configuration of an analysis system in which the autoQC 1 is additionally disposed in a specimen pretreatment system.

FIGS. 39 and 40 illustrate an example in which the autoQC 1 is additionally disposed in a system having a specimen pretreatment system (LAS: Laboratory Automation System) 88 that performs pretreatment such as opening and closing specimen container caps and centrifugation.

FIG. 39 illustrates an example in which the autoQC 1 is connected between the LAS 88 and the SSU 85, and FIG. 40 illustrates an example in which the autoQC 1 is connected further downstream of the LAS 88, the SSU 85, and the AU 86. That is, when the LAS 88, the SSU 85, and the AU 86 are already placed in the existing automatic analysis system and then the autoQC 1 is to be additionally placed, the system configuration illustrated in FIG. 40 may be desirable.

In the example illustrated in FIG. 40, the autoQC 1 is located on the most downstream side, and therefore, when such connection is performed, it is necessary to deliver the QC specimen container 15, which is taken out from the inside of the storage chamber 10, to the upstream side via the returning conveyance path 24 instead of the main conveyance path 27.

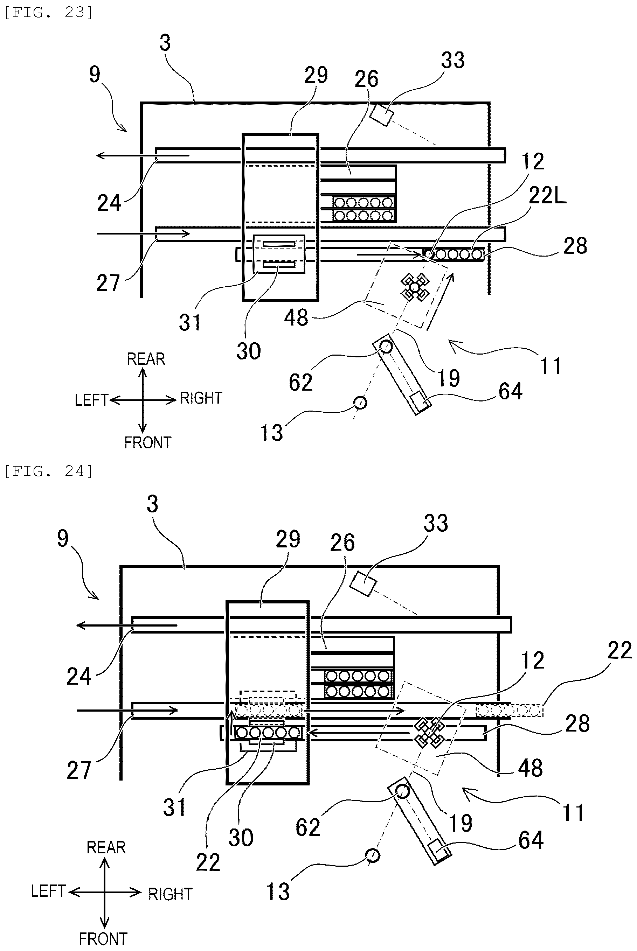

That is, when conveying the rack 22 on which the container 15 has been placed as illustrated in FIGS. 19 and 24, the rack 22 can be conveyed to the upstream side via the returning conveyance path 24 by transferring the rack 22 from the transfer line 28 to the returning conveyance path 24 instead of transferring the rack 22 from the transfer line 28 to the main conveyance path 27 by the rack transfer mechanism 29.

Conversely, the rack 22 for which quality control has ended returns to the autoQC 1 from the main conveyance path 27 instead of the returning conveyance path 24. Therefore, instead of transferring the rack 22 from the returning conveyance path 24 to the transfer line 28 by the rack transfer mechanism 29 as illustrated in FIGS. 25 to 27, the rack 22 may be transferred from the main conveyance path 27 to the transfer line 28 by the rack transfer mechanism 29.

Such a conveyance operation of the rack 22 can be set by operation control software of the container storage device 1.

### (Arrangement of Two AutoQCs)

Furthermore, a system in which two autoQCs 1 are connected can also be constructed, and an example thereof is a configuration in which another autoQC 1 is connected to the right end of the system shown in FIG. 39, and another example thereof is a configuration in which a second autoQC 1 is further connected to the right end of the configuration shown in FIG. 40.

By connecting a plurality of autoQCs 1, the number and types of QC specimens that can be stored can be increased, and even when one autoQC 1 fails or stops in maintenance work, analysis work can be continued without stopping the entire system by operating the other autoQC 1, and therefore, there is an effect that a highly reliable automatic analysis system can be configured.

### <Eighth Embodiment>

An eighth embodiment of the invention will be described in detail with reference to FIG. 41.

The present embodiment illustrates a configuration of an analysis system in which the autoQC 1 is additionally disposed in a system in which a plurality of AUs are arranged side by side via a specimen conveyance module.

FIG. 41 illustrates an example in which the autoQC 1 according to the invention is connected to a system in which a plurality of AUs 86 are arranged side by side via a specimen conveyance module 89.

Here, an example in which three AUs 86 are arranged side by side is shown, and the autoQC 1 is connected to two of the AUs 86. That is, the number of AUs 86 connected to the specimen conveyance module 89 may not match the number of autoQCs 1.

The QC specimen containers 15 stored in a plurality of autoQCs 1 can be placed on the rack 22 and conveyed to another AU 86 via the specimen conveyance module 89. Therefore, quality control can be performed using not only the QC specimen container 15 stored in the autoQC 1 adjacent to each AU 86 but also the QC specimen in the QC specimen container 15 stored in another autoQC 1.

Therefore, for example, the QC specimen in the same QC specimen container 15 can also be used for quality control of a plurality of AUs 86, and therefore, the optimum type and number of QC specimen containers 15 can be stored in the entire system. That is, it is possible to construct an optimum system with improved system efficiency.

Further, when the AU 86 and the autoQC 1 are connected via the connection conveyance path 87, the QC specimen container 15 is only conveyed between the adjacent AU 86 and the autoQC 1, whereas when the QC specimen container 15 is conveyed to another AU 86 via the specimen conveyance module 89, the conveyance of the rack on which the general specimen such as patient blood to be conveyed through the specimen conveyance module 89 is placed is prevented, and the processing throughput may be reduced. Therefore, it is preferable to perform storage distribution of the QC specimens to a plurality of autoQCs 1 so that the frequency at which the QC specimen container 15 is conveyed through the specimen conveyance module 89 is reduced, and it is possible to construct an optimal system with improved efficiency of the system.

### (Direct Connection to Conveyance Path)

Furthermore, one or a plurality of autoQCs 1 may be connected to the specimen conveyance module 89 via the connection conveyance path 87 without using the AU 86. Also in the case of such connection, the QC specimen container 15 stored in autoQC 1 can be distributed and conveyed to a plurality of AUs 86 via the specimen conveyance module 89, and the optimum type and number of QC specimen containers 15 can be stored in the system as a whole, and therefore, the optimum system can be constructed with improved efficiency of the system. Although FIG. 41 illustrates an example in which two autoQCs 1 are connected in series via the connection conveyance path 87, two or more autoQCs 1 may be connected in parallel to the connection conveyance path 87 via the connection conveyance path 87.

As described above, when the container storage device 1 capable of cooling and storing the QC specimen container 15 is used, the automatic quality control function can be added to the existing automatic analysis system later. Furthermore, since an appropriate number of the container storage devices 1 can be freely arranged in an appropriate place, there is an effect that an optimum automatic analyzer system can be constructed according to conditions of a placement location or customer needs.

### <Other Configurations>

The container storage device 1 according to the present embodiment is not limited to the above-described embodiment.

### (Left-Right Symmetric Arrangement)

Although the first reception position 12 and the second conveyance path support column 17 are provided on the downstream side, the invention is not limited to such a form. The first reception position 12 and the second conveyance path support column 17 may be provided on the upstream side, and the STAT port 32, the rack transfer mechanism 29, the empty rack buffer 26, the first reception position 12, and the second conveyance path 11 may be arranged at symmetrical positions.

### (STAT Port)

Although the STAT port 32 is provided upstream of the main conveyance path 27, the arrangement is not limited thereto. The STAT port 32 may be provided on the transfer line 28. In such an arrangement, the rack 22 placed on the STAT port 32 can also be transferred to the main conveyance path 27 via the rack transfer mechanism 29 and conveyed to the downstream side, or can also be transferred to the returning conveyance path 24 and conveyed to the upstream side.

### (Other than QC Specimen)

The liquid in the container 15 is not necessarily limited to the QC specimen, and may be a general specimen such as blood or urine of a patient, a reagent used for analysis, or a cleaning liquid for cleaning, for example, a tip of a dispensing nozzle.

### (Necessity of Sealing)

Further, in the present embodiment, a configuration is shown in which the containers are stored one by one in the container case 36 sealed by the opening and closing lid 53 in the storage chamber, but the invention is not limited to such a configuration. In the case of a specimen component for which it is not necessary to hermetically store the container 15, for example, the container 15 may be inserted into the disk 34 having a large number of concentric holes for holding the containers 15 and stored. In such a configuration, the lid opening and closing mechanism 54 is unnecessary.

### (Mixing of Different-Diameter Cases)

Further, the plurality of container cases 36 stored in the storage chamber 10 do not need to have the same shape, and may be configured to store a plurality of types of container cases 36 having different diameters.

### (One Rack)

In the present embodiment, the rack 22 is configured to hold five containers 15, but the rack is not necessarily configured to hold five containers 15, and may be configured to hold, for example, only one container 15.

### <Effects>

According to the container storage device 1 (autoQC module) of the invention, it is possible to modularize a container storage device that automatically stores the quality control specimen and supplies the quality control specimen to the analyzer, and it is possible to shorten the dimension in the lateral width direction corresponding to the conveyance direction of the specimen or the sample, and it is possible to achieve the small-size and large-capacity container storage device 1.

That is, the STAT port 32, the rack transfer mechanism 29, the empty rack buffer 26, and the first reception position 12 are arranged in this order from the left side surface side of the first conveyance path 9, the first reception position 12 is set to a position on the transfer line 28 which is obtained by moving the rack 22 leftward from the second side surface 4b, which is the right side surface of the housing 2, by substantially the longitudinal dimension LR of the rack 22, the second conveyance path 11 for conveyance between the first reception position 12 and the second reception position 13 for accessing the container 15 in the storage chamber 10 is disposed obliquely with respect to the first conveyance path 9, and the width of the first conveyance path 9 and the diameter of the storage chamber 10 are arranged to be substantially equal to the width of the left and right side surfaces of the housing, so that the width dimension in the left-right direction of the container storage device 1 can be reduced to achieve miniaturization.

Furthermore, the opening 66 for taking out the QC specimen container 15 from the storage chamber 10 is configured to be minimized, and therefore, even when the shutter 51 is opened, the amount of outside air at room temperature entering the storage chamber 10 can be minimized, a temperature rise and condensation inside the storage chamber 10 can be prevented, and a highly reliable container storage chamber 10 capable of stably storing the QC specimen container 15 for a long period of time can be provided.

Furthermore, since the QC specimen container 15 is stored in the container case 36 provided with the opening and closing lid 53 in the container storage chamber 10, there is an effect that it is possible to provide a highly reliable container storage chamber 10 in which the QC specimen container 15 can be kept airtight to prevent evaporation and the QC specimen container 15 can be stably stored for a long period of time.

Furthermore, the second conveyance path 11 for conveyance between the second reception position 13 for accessing the containers 15 in the storage chamber 10 and the first reception position 12 for accessing the containers 15 in the first conveyance path 9 is disposed on a straight line such that the conveyance trajectory of the containers 15 coincides with the radial direction of the storage chamber 10 in a plan view, and therefore, the conveyance rail 60, which is a movement mechanism in the horizontal plane of the second conveyance path 11, can be implemented by a so-called single-axis slide rail, and can be achieved with a simple configuration.

Furthermore, the second conveyance path support column 17 is provided in a substantially triangular region sandwiched by the first conveyance path 9, the second side surface 4 of the housing 2, and the cylindrical storage chamber 10, the rigidity of the second conveyance path support column 17 can be ensured, and further, when the conveyance rail 60 in the horizontal plane of the second conveyance path 11 is fixedly supported in the vicinity of the second conveyance path support column 17, the support rigidity of the second conveyance path 11 can be increased, and the positional accuracy of the container 15 to be conveyed can be increased while preventing deflection.

Furthermore, the first conveyance path 9 is provided with the transfer line 28 including the first reception position 12 between the main conveyance path 27 and the storage chamber 10, and therefore, the length of the second conveyance path 11 can be shortened to shorten the conveyance time, thereby achieving an effect of achieving high speed.

Furthermore, the transfer line 28 is provided adjacent to the main conveyance path 27, even when the container gripping mechanism 48 is accessing the container 15 at the first reception position 12, the conveyance of the rack 22 conveyed through the main conveyance path 27 is not hindered, and therefore, there is an effect that an automatic analysis system with high processing capacity can be provided.

Furthermore, the third reception position 62 including the barcode reader 64 is provided between the first reception position 12 and the second reception position 13, and therefore, the barcode 21 of the container 15 taken out from the storage chamber 10 at the start of quality control can be checked and then placed on the rack 22. Further, the container 15 taken out from the rack 22 returned after completion of the quality control can be returned to the storage chamber 10 after the barcode 21 is checked, and therefore, the barcode 21 can also be reliably checked when the container 15 is stored in the storage chamber 10.

Furthermore, the container 15 returned after completion of the quality control can be stored in the same container case 36 when it is taken out at the start of the quality control, and therefore, there is an effect that it is possible to provide a highly reliable container storage chamber 10 in which mixing of different specimen components which may occur when the container case 36 where the container 15 is stored is different from the container case 36 from which the container 15 is taken out does not occur, and the QC specimen container 15 can be stably stored for a long period of time.

Furthermore, the empty rack buffer 26 on which a plurality of empty racks 22 are placed is provided, and therefore, it is not necessary for the operator to insert the empty rack 22 when performing quality control, and quality control can be automatically performed.

Furthermore, the empty rack buffer 26 has an empty region for one rack 22 in the initial state, and therefore, even if the rack 22 to be stored in the container storage device 1 returns from another adjacent module before the first empty rack is delivered, the corresponding rack 22 can be stored.

Furthermore, the rack transfer mechanism 29 capable of transferring the rack 22 among the transfer line 28, the main conveyance path 27, the empty rack buffer 26, and the returning conveyance path is provided, and therefore, the rack 22 can be freely moved. Therefore, the rack 22 on which the QC specimen container 15 is placed in the transfer line 28 can also be transferred to the main conveyance path 27 and conveyed to the downstream side, and the rack 22 can be transferred from the transfer line 28 to the returning conveyance path 24 and conveyed to the upstream side, and therefore, the AU 86 can be connected to both the upstream side and the downstream side of the container storage device 1 according to the invention.

Furthermore, the opening and closing operation of the opening and closing lid 53 and the gripping or releasing operation of the container 15 can be continuously performed at minimum time intervals, and therefore, there is an effect that a series of handling operations of the container 15 can be performed in a short time, and throughput can be increased.

Furthermore, the exhaust heat from the inside of the housing and the exhaust heat from the cooling element 41 are discharged to the recessed portion provided in the lower portion of the back surface of the housing 2 located immediately below the first conveyance path 9, and therefore, the relative humidity becomes low by setting the first conveyance path 9 to a temperature higher than the ambient temperature by the exhaust heat. Thus, there is an effect of preventing condensation on the surface of the QC specimen container 15 taken out from the storage chamber 10 and conveyed through the first conveyance path 9 via the first reception position 12.

Furthermore, by providing the safety cover 72 that covers the second conveyance path 11 to ensure safety, and by providing the opening and closing door 74 of an opening and closing type on the side surface or the front surface of the safety cover 72, for example, a cleaning operation of a portion requiring cleaning such as a tip of the container gripping claw 65 of the container gripping mechanism 48 in the second conveyance path 11 is facilitated, and the container storage device 1 with good maintainability and high reliability can be achieved.

Furthermore, by connecting the container storage device 1 of the invention, an automatic quality control function can be added to an existing automatic analysis system, and an increase in the lateral width, which is the conveyance direction of the specimen, can be minimized.

Furthermore, the container storage device 1 of the invention can be connected to both the upstream side and the downstream side of the analysis module, and therefore, there is an effect that an automatic analysis system having a high degree of freedom in configuration and arrangement and including an AutoQC module can be constructed.

Furthermore, an automatic analysis system including a plurality of AutoQC modules can be constructed as necessary, and there is an effect that an automatic analysis system having a high degree of freedom in configuration and arrangement can be constructed.

### <Appendix>

The invention is not limited to the above-described embodiments, and includes various modifications. For example, the above embodiments have been described in detail in order to facilitate understanding of the invention, and is not necessarily limited to those including all the configurations described above. In addition, a part of a configuration according to a certain embodiment can be replaced with a configuration according to another embodiment, and a configuration according to another embodiment can be added to a configuration according to a certain embodiment. In addition, another configuration can be added to, deleted from, or replaced with a part of a configuration of each embodiment.

### Reference Signs List

1 container storage device
2 housing
3 first side surface
4 second side surface
5 third side surface
6 upper surface
7 bottom surface
8 back-surface recessed portion
9 first conveyance path
10 storage chamber
11 second conveyance path
12 first reception position
13 second reception position
14 control device
15 container
16 QC specimen
17 second conveyance path support column
18 base member
19, 19a, 19b container transfer trajectory
20 cooling unit
21 barcode
22, 22L, 22R rack
23 insertion hole
24 returning conveyance path
25 slot
26 empty rack buffer
27 main conveyance path
28 transfer line
29 rack transfer mechanism
30 hand
31 hand opening and closing mechanism
32 STAT port
33 barcode reader
34 disk
35 heat insulator
36 container case
37 intake port
38 discharge port
39 cool air duct
40a, 40b cool air blowing fan
41 cooling element
42 cooling fin
43 heat-dissipation fin
44 heat-dissipation fan
45 drain receiving tray
46 exhaust fan
47 hot air discharge passage
48 container gripping mechanism
49 shutter supporting shaft
50 shutter opening and closing mechanism
51, 51a, 51b shutter
52 lid supporting shaft
53 opening and closing lid
54 lid opening and closing mechanism
55 lid opening claw receiving portion
56 lid opening and closing arm
57 arm horizontal moving rail
58 arm up and down moving rail
59 lid opening claw
60 conveyance rail
61 up and down moving rail
62 third reception position
63 container placing unit
64 barcode reader
65 container gripping claw
66, 66a, 66b opening
67 airtight seal member
68a outer circumference circle
68b middle circumference circle
68c inner circumference circle
69 storage chamber central axis
70 disk supporting shaft
71 disk drive shaft
72 safety cover
73 supporting shaft
74 opening and closing door
75 monitor
76 cooling drive circuit
77 housing heat-dissipation fan
78 fourth reception position
79 front and rear rails
80 left and right rails
81 second front and rear rail supporting column
82 storage chamber
83 storage chamber lid
84 container gripping mechanism
85 sample supply module (SSU)
86 analysis module (AU)
87 connection conveyance path
88 specimen pretreatment system (LAS)
89 specimen conveyance module
90 stepping motor

## Claims

1. A container storage device comprising:
a housing which has a first side surface and a pair of second side surfaces respectively extending from both ends of the first side surface;
a first conveyance path which is formed along the first side surface and through which a plurality of containers containing a liquid are conveyable;
a cylindrical storage chamber surrounded by the first conveyance path and the pair of second side surfaces and configured to store the plurality of containers; and
a second conveyance path through which the containers are conveyable between a first reception position on the first conveyance path and a second reception position in the storage chamber, wherein
a straight line connecting the first reception position and the second reception position in a plan view is formed obliquely to the first conveyance path.

2. The container storage device according to claim 1, wherein
the second conveyance path includes a moving rail disposed parallel to the straight line connecting the first reception position and the second reception position.

3. The container storage device according to claim 2, wherein
the moving rail is supported by the first conveyance path, the storage chamber, and a support column standing on a portion surrounded by a second side surface of the pair of second side surfaces on a side close to the second conveyance path.

4. The container storage device according to claim 3, wherein
a contact portion between a bottom surface of the second conveyance path and the support column is located on a first conveyance path side in a longitudinal direction of the second conveyance path.

5. The container storage device according to claim 2, wherein
an extension line of the straight line connecting the first reception position and the second reception position passes through a center of the storage chamber.

6. The container storage device according to claim 3, wherein
the first reception position is formed on a side opposite to the second reception position with the support column interposed therebetween.

7. The container storage device according to claim 1, wherein
the storage chamber is configured to store the plurality of containers in multiple concentric circles, and
the second reception position is formed on each of the concentric circles.

8. The container storage device according to claim 1, further comprising:
a rack configured to allow one or more of the containers to be placed thereon, wherein
the first conveyance path is handled in units of the rack, and the second conveyance path is handled in units of the container.

9. The container storage device according to claim 3, wherein
the first conveyance path includes
a main conveyance path through which the rack configured to allow one or more containers to be placed thereon is conveyed to an external device,
a transfer line formed along the main conveyance path and connected to the second conveyance path, and
a returning conveyance path configured to convey the rack conveyed from the external device in a direction opposite to that of the main conveyance path.

10. The container storage device according to claim 9, wherein
the transfer line is formed on a side close to the storage chamber with respect to the main conveyance path, and
the returning conveyance path is formed on a side opposite to the transfer line with respect to the main conveyance path.

11. The container storage device according to claim 9, wherein
the first reception position is formed at an intersection of the transfer line and the straight line connecting the first reception position and the second reception position.

12. The container storage device according to claim 9, wherein
the first reception position is formed on the transfer line and on a side that is closer to the support column than is a line perpendicular to the transfer line from the center of the storage chamber.

13. The container storage device according to claim 9, wherein
the first reception position is formed at a position of the container placed on a side of the rack farthest from the support column when the rack is placed on a side of the transfer line closest to the support column.

14. The container storage device according to claim 9, wherein
the first conveyance path further includes a buffer disposed between the main conveyance path and the returning conveyance path along the main conveyance path and configured to accommodate a plurality of the racks.

15. The container storage device according to claim 14, wherein
the first conveyance path further includes
a rack transfer mechanism configured to transfer the rack among the transfer line, the main conveyance path, and the returning conveyance path, and
a rack moving mechanism configured to move the rack between the buffer and the rack transfer mechanism along the main conveyance path.

16. The container storage device according to claim 15, wherein
the first conveyance path further includes an emergency rack loading region in which the rack is manually suppliable between a side of the main conveyance path farthest from the support column and the rack transfer mechanism.

17. The container storage device according to claim 16, wherein
the first conveyance path is formed in an order of the emergency rack loading region, the rack transfer mechanism, the buffer, and the first reception position from the side of the main conveyance path farthest from the support column to a side closest thereto.

18. The container storage device according to claim 2, wherein
the second conveyance path includes a container gripping mechanism movable horizontally along the moving rail, movable in a vertical direction, and configured to grip and release the container.

19. The container storage device according to claim 1, wherein
the second conveyance path has a third reception position, at which the container is to be placed, between the first reception position and the second reception position, and further includes, at the third reception position, a bar code reading device configured to read a bar code provided on the container.

20. The container storage device according to claim 18, further comprising:
an opening formed on an upper surface of the storage chamber and directly above the second reception position;
a shutter configured to open and close the opening; and
a shutter opening and closing mechanism configured to drive the shutter to be opened and closed, wherein
the opening has a rectangular shape having a long side parallel to a straight line connecting the center of the storage chamber and the first reception position, the shutter is opened to an outside of the opening in a vertical projection plane when the shutter is rotated around a supporting shaft parallel to the second conveyance path and opened, and in a state in which the shutter is opened, the container is taken out of the storage chamber or the container is carried into the storage chamber by the container gripping mechanism through the opening.

21. The container storage device according to claim 20, wherein
the storage chamber includes
a plurality of container cases arranged in multiple concentric circular shapes and configured to respectively store the containers,
an opening and closing lid provided openably and closeably on an upper surface of the container case, and
a seal member provided on the opening and closing lid and configured to maintain airtightness with the container case when the opening and closing lid is closed, and
a lid opening and closing mechanism is provided, which acts on the opening and closing lid via the opening to open and close the opening and closing lid in a state in which the shutter is opened.

22. The container storage device according to claim 21, wherein
the lid opening and closing mechanism is disposed on a side opposite to the first reception position with respect to the opening along the second conveyance path.

23. The container storage device according to claim 1, wherein
the second conveyance path includes
a first moving rail movable parallel to the first conveyance path in a horizontal plane, and
a second moving rail movable perpendicularly to the first moving rail in the horizontal plane.

24. The container storage device according to claim 22, further comprising:
a cover which is in contact with the upper surface of the storage chamber and has a rectangular parallelepiped shape covering at least the shutter, the shutter opening and closing mechanism, and the lid opening and closing mechanism; and
an opening and closing door provided on at least one side surface of the cover.

25. The container storage device according to claim 1, further comprising:
a cooling unit connected to the storage chamber and configured to cool an inside of the storage chamber; and
a hot air discharge passage and an exhaust fan configured to exhaust, to an outside of the housing, high-temperature exhaust air discharged from the cooling unit to the outside, wherein
the exhaust fan exhausts air toward a lower portion of the first conveyance path on the back surface of the housing.

26. A container storage device comprising:
a housing which has a first side surface and a pair of second side surfaces respectively extending from both ends of the first side surface;
a first conveyance path which is formed along the first side surface and through which a plurality of containers containing a liquid are conveyable;
a storage chamber having a rectangular shape being longer in a second side surface direction than a first side surface direction, configured to store the plurality of containers therein, and including an opening and closing lid by which an upper surface is openable and closeable; and
a second conveyance path through which the container is conveyable between a first reception position on the first conveyance path and a second reception position in the storage chamber, wherein
the second conveyance path includes
a first moving rail movable parallel to the first conveyance path in a horizontal plane, and
a second moving rail movable perpendicularly to the first conveyance path in the horizontal plane.

27. An analysis system comprising:
the container storage device according to claim 1 configured to store at least one of the container containing a standard sample and the container containing a quality control sample; and
an analysis module configured to perform analysis using a sample contained in the container conveyed from the container storage device.

28. A container transfer method for a container storage device, the container storage device including: a housing which has a first side surface and a pair of second side surfaces respectively extending from both ends of the first side surface; a first conveyance path which is formed along the first side surface and through which a plurality of containers containing a liquid are conveyable; a cylindrical storage chamber surrounded by the first conveyance path and the pair of second side surfaces and configured to store the plurality of containers; and a second conveyance path through which the containers are conveyable between a first reception position on the first conveyance path and a second reception position in the storage chamber, in which a straight line connecting the first reception position and the second reception position in a plan view is formed obliquely to the first conveyance path, the container transfer method comprising:
a step of taking out the container from the storage chamber at the second reception position;
a step of transferring the container from the second reception position to the first reception position by the second conveyance path; and
a step of placing the container at the first reception position.

29. The container transfer method according to claim 28, further comprising:
a step of taking out the container at the first reception position;
a step of transferring the container from the first reception position to the second reception position by the second conveyance path; and
a step of placing the container at the second reception position.
